# EUROPEAN PATENT SPECIFICATION

(11) **EP 1 630 725 B1**
(45) Date of publication and mention of the grant of the patent: **23.04.2008**
(21) Application number: 04745435.0
(22) Date of filing: 24.05.2004
(51) Int. Cl.: G06K 13/08

(54) **CARD PROCESSING DEVICE**
KARTENVERARBEITUNGSEINRICHTUNG
DISPOSITIF DE TRAITEMENT DE CARTE

(30) Priority: 23.05.2003 JP 2003146143; 22.07.2003 JP 2003199719; 19.12.2003 JP 2003423390
(43) Date of publication of application: 01.03.2006
(73) Proprietor: OMRON CORPORATION, Kyoto-shi, Kyoto 600-8530 (JP)
(72) Inventor: OKADA, Masanobu, c/o Omron Corporation, Shimogyo-ku, Kyoto-shi, Kyoto 600-8530 (JP); YAMASHITA, Akinori, Nagaokakyo-shi, Kyoto 617-0845 (JP)
(74) Representative: Strehl Schübel-Hopf & Partner
(86) International application number: PCT/JP2004/007429
(87) International publication number: WO 2004/104910

(56) References cited:
- EP-A- 0 964 358
- CA-A1- 2 273 678
- JP-A- 8 023 533
- JP-A- 2000 099 637
- JP-A- 2001 222 686
- JP-A- 2002 099 953

## Description

### TECHNICAL FIELD

The present invention relates to a card processing device for transporting a card such as a magnetic card or an integrated-circuit (IC) card having recorded information, from an insertion port to an interior space of the card processing device, reading information from the card or writing information therein, and discharging the card from the insertion port.

### BACKGROUND ART

Conventionally, the card processing device transports a card inserted in an insertion port to an interior space of the device by rotating rollers. The device reads information recorded in the card by a read head. Or, the device writes information therein by a write head. Thereafter, the device rotates the rollers in a reverse direction to discharge the card from the insertion port.

Assuming a use of a card processing device attached onto a higher-level apparatus such as an automatic tellers machine, there possibly occurs a case in which a dishonest person aiming at doing a dishonest thing works on the card processing device with the intention that the card clogs in the device. In such a case in which the dishonest person works on the card processing device as above, when a user of the automatic teller machine inserts a card in an insertion port of the card processing device attached to the automatic tellers machine, the card clogs in the device. To remove the trouble, the user then attempts to call a person in charge of the device. Accordingly, the user leaves the place where the automatic teller machine is installed and moves to the person in charge. At this point of time, the dishonest person removes by a tool the card clogged in the device. This leads to a problem that the person runs away with the card.

To solve such problem, JP-A-2001-222686 and JP-A-2002-99953 have proposed a card processing device which operates, when clogging of a card is detected, a preventive mechanism to prevent the card from being taken away or removed. The former employs, as the preventive mechanism, an item which pushes a pad like rubber or a pointed projection member against a surface of the card. Therefore, a portion of a tip end of the projection member encroaches on the card surface to thereby prevent the card from being taken away. The latter employs, as the preventive mechanism, a mechanism in which a cutter is pushed against a side surface of the card. Therefore, a tip end of the cutter encroaches on the card side surface to thereby prevent the card from being removed from the transport path.

In the preventive mechanisms described above, for the projection member and the cutter to continuously encroach on the card, it is necessary to continuously drive the projection member and the cutter.

Also CA 2 273 678 from which the precharacterising first part of claim 1 starts out discloses a mechanism for preventing removal of a card, which mechanism is powered by a solenoid.

EP 0 964 358 A1 discloses a mechanism for preventing removal of a card by means of a cam.

### SUMMARY OF THE INVENTION

It is an object of the invention to provide a card processing device having a preventive mechanism driven into operation by once applying a force onto the mechanism, to thereby prevent the card from being removed.

This object is solved by the card processing device of claim 1. The dependent claims relate to preferred embodiments of the invention.

According to an embodiment of the present invention, a card processing device includes an insertion port for inserting a card having recorded information and a transport mechanism for transporting the card inserted in the insertion port to an interior of the card processing device or transporting the card from the interior to the insertion port. Moreover, the card processing device includes a head for reading information from the card transported in the interior of the transport mechanism or writing information in the card. Furthermore, the card processing device includes a sensor for detecting an abnormality of the card and a preventive mechanism for preventing, when the sensor detects an abnormality, removal of the card from the insertion port. The preventive mechanism includes an eccentric cam and an actuator. The eccentric cam includes an outer peripheral section with a long distance from a rotary axis to an outer periphery to be brought into contact with the card to be transported and an outer peripheral section with a short distance from a rotary axis to an outer periphery to be separated from the card to be transported. The actuator causes, when the sensor does not detect an abnormality, the outer peripheral section with a short distance to face a transport path of the card and rotates, when the sensor detects an abnormality, the eccentric cam to cause the outer peripheral section with a long distance to face the transport path of the card to thereby bring the outer periphery of the eccentric cam into contact with the card.

When an abnormality is absent from the card, the eccentric cam is apart from the card transport path. In this situation, the card is not in contact with the eccentric cam. When the sensor detects an abnormality of the card, the eccentric cam rotates. In this situation, the eccentric cam comes into contact with the card. Therefore, the eccentric cam pushes the surface of the card. As a result, moving of the card is prevented.

In this connection, the head is a module which reads information recorded in the card or which writes information in the card. The head may conduct both of or either one of the read and write operations. The cards for the information read and write operations may be cards such as a magnetic card, a contact-type IC card, a contactless-type IC card on which information has been recorded. The head is a module corresponding to a type of the card such as a magnetic head, an IC contact head, or an antenna.

Abnormalities of a card are associated with phenomena which make the card processing of the card processing device difficult such as clogging of a card and impact against the card processing device. To detect the clogging of the card, a sensor to detect abnormalities of a card can be configured using a module to detect a phenomenon in which although a card is desired to be transported to a predetermined position, the card is not transported thereto. For example, the clogging of the card can be detected by detecting a phenomenon in which although a transport mechanism operates to transport the card, the card does not pass a predetermined position. Moreover, the clogging of the card may also be detected by detecting a phenomenon in which although an optical sensor or the like has detected passage of a card through a predetermined position, the optical sensor cannot detect the passage of the card through a subsequent position through which the card is scheduled to pass within a predetermined period of time. Additionally, the clogging of the card may also be detected by detecting a phenomenon in which although the transport mechanism desires to transport a card, the mechanism does not operate. In addition, the clogging of the card can also be determined when a sensor to detect closing of a card continuously detects a card for a period of time equal to or more than a predetermined period of time. Furthermore, a card abnormality may also be detected when information of an abnormality of a card is received from a higher-level apparatus of the card processing device.

The eccentric cam rotates about a rotary axis, and due to the rotation, an outer periphery of the eccentric cam comes into contact with a surface of a card or the outer periphery leaves therefrom.

The actuator moves an item as its object. For example, a solenoid or a motor is such actuator.

Also, according to the present invention, the actuator rotates, when the sensor detects an abnormality, the eccentric cam. The actuator can directly rotate the eccentric cam. Moreover, by the operation of the actuator, the eccentric cam can be rotated by force of a spring. As a result, the actuator can move the outer peripheral section with a long distance from the rotary axis to the outer periphery in a direction substantially equal to a direction to remove the card from the insertion port into an outer space.

If it is attempted in this situation to remove the card from the insertion port, the eccentric cam further rotates by frictional force between the card and the cam. Since the outer periphery of the cam pushes the card surface, the frictional force between the card and the cam increases. Therefore, it is much more difficult to remove the card from the insertion port.

In the present invention, the eccentric cam favorably includes a substance with a coefficient of friction more than that of the card. Moreover, only the outer periphery of the cam may include such substance with a larger coefficient of friction.

In the present invention, depressions and projections may be disposed in the outer periphery of the eccentric cam. As a result, when the cam comes into contact with the card surface and further rotates, depressions of the cam encroaches on the surface. This increases the frictional force between the eccentric cam and the card. Therefore, it is more difficult to remove the card.

In the present invention, it is possible to dispose rubber on the outer periphery of the eccentric cam. In this case, it is favorable that the outer periphery of the eccentric cam is covered with rubber. Furthermore, items made of rubber may also be disposed in lines along the outer periphery of the eccentric cam. As a result, when the eccentric cam comes into contact with the card surface, the frictional force between the cam and the card further increases. Therefore, it is more difficult to remove the card.

In the present invention, it is possible to dispose a fixing tool to prevent rotation of the eccentric cam when the outer periphery of the cam comes into contact with the card surface due to rotation of the cam. This makes it difficult to move the card inserted in the card processing device from an outer space. Also, the fixing tool may be installed such that the outer periphery of the eccentric cam is continuously in contact with the card surface to thereby fix the eccentric cam.

### BRIEF DESCRIPTION OF DRAWINGS

FIG. 1 is a simplified construction diagram of an interior of a card processing device.
FIG. 2 is a block diagram showing an electric configuration of the card processing device.
FIG. 3 is a flowchart showing an outline of card processing.
FIG. 4 is a flowchart showing in detail magnetic card acquisition processing and magnetic card read processing.
FIG. 5 is a diagram showing a position of a card in the card processing device.
FIG. 6 is a diagram showing a position of a card in the card processing device.
FIG. 7 is a diagram showing a position of a card in the card processing device.
FIG. 8 is a flowchart showing in detail card removal prevention processing.
FIG. 9 is a diagram showing a first embodiment of a prevention mechanism.
FIG. 10 is a diagram showing a first embodiment of a prevention mechanism.
FIG. 11 is a magnified diagram showing contact sections between an eccentric cam, a card, and a stand of FIG. 10.
FIG. 12 is a diagram showing a first embodiment of a prevention mechanism.
FIG. 13 is a magnified diagram showing contact sections between an eccentric cam, a card, and a stand of FIG. 12.
FIG. 14 is a side view of the eccentric cam along an arrow direction of FIG. 10.
FIG. 15 is a magnified view of an eccentric cam with rubber attached on its outer periphery.
FIG. 16 is a magnified view of an outer periphery of an eccentric cam with depressions and projections disposed in its outer periphery.
FIG. 17 is a flowchart showing in detail magnetic card write processing.
FIG. 18 is a flowchart showing in detail card discharge processing.
FIG. 19 is a flowchart showing in detail IC card acquisition, read, and write processing.
FIG. 20 is a diagram showing a second embodiment of a prevention mechanism.
FIG. 21 is a diagram showing a second embodiment of a prevention mechanism.
FIG. 22 is a magnified side view of portions an eccentric cam and a stand.
FIG. 23 is a magnified side view of portions an eccentric cam and a stand.
FIG. 24 is a diagram showing a third embodiment of a prevention mechanism.
FIG. 25 is a diagram showing a third embodiment of a prevention mechanism.
FIG. 26 is a diagram showing a third embodiment of a prevention mechanism.
FIG. 27 is a diagram showing a fourth embodiment of a prevention mechanism.
FIG. 28 is a diagram showing a fourth embodiment of a prevention mechanism.
FIG. 29 is an assembly diagram of a fifth embodiment of an eccentric cam.
FIG. 30 is an exploded diagram of the fifth embodiment of an eccentric cam.
FIG. 31 is a diagram showing a sixth embodiment of a prevention mechanism.
FIG. 32 is a diagram showing a sixth embodiment of a prevention mechanism.

### BEST MODE FOR CARRYING OUT THE INVENTION

Next, description will be given for each embodiment a configuration to implement a card processing device of the present invention.

### <First embodiment>

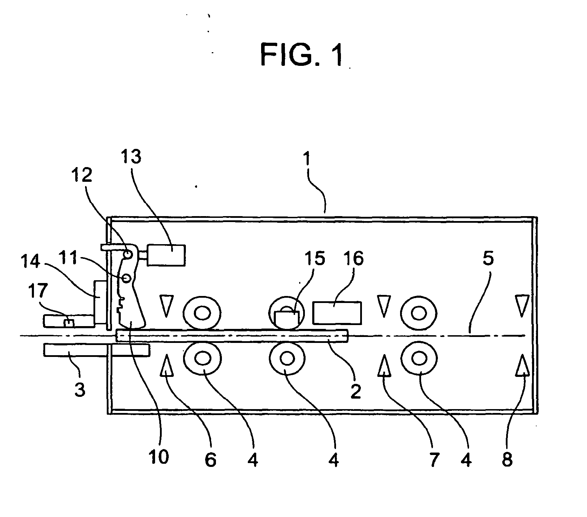

Fig. 1 shows a simplified configuration of an interior of a card processing device 1 according to the present invention. An insertion detection sensor 17 detects insertion of a card 2 in an insertion port 3. The card 2 has recorded information. If the card 2 is a magnetic card, magnetic information is recorded on a magnetic stripe. If the card 2 is an contact-type IC card, the IC card includes contact points on a surface thereof. The contact points are connected to an IC chip in the IC card and information is recorded in the IC chip. Furthermore, if the card 2 is an contactless-type IC card, the IC card includes therein an antenna and an IC chip for communication. In the description below, an IC card indicates a contact-type IC card in the embodiments of the present invention unless otherwise specified.

When the insertion detection sensor 17 detects insertion of the card 2, a shutter 14 opens. As a result, the card processing device 1 can transport the card 2 to an interior thereof. A transport path 5 to transport the card 2 is indicated by a dot-and-dash line. The transport path 5 includes the insertion port 3 and upper and lower rollers 4. When a motor conducts a drive operation, the rollers 4 rotate. When the inserted card 2 is brought into contact with the rollers 4, the card 2 is transported to the interior of the card processing device 1 by the rotation of the roller 4. Card detection sensors 6, 7, and 8 detect presence or absence of the card 2 at respective positions. After insertion of the card 2, when the card detection sensor 6 is changed from a state in which the senor 6 is detecting the card 2 to a state in which the sensor 6 does not detect the card 2, the shutter 14 closes.

If the inserted card 2 is a magnetic card, a magnetic head 15 reads magnetic information of the card 2 or writes magnetic information therein during the transport of the card 2. If the inserted card 2 is a contact-type IC card, the card processing device 1 transports the card 2 to a predetermined position. Thereafter, a solenoid to lower an IC contact head 16 conducts a drive operation such that the head 16 is lowered to come into contact with the contact points of the IC card. The head 16 then reads information from or writes information in the card 2. When the read or write operation is completed, the solenoid to lower the head 16 terminates the drive operation. The head 16 then ascends. When the information read or write operation is finished for the card 2, the rollers 4 rotate in a reverse direction. Then, the card 2 is transported toward the insertion port 3. When the card detection sensor 6 is changed from a state in which the sensor 6 does not detect the card 2 to a state in which the sensor 6 detects the card 2, the shutter 14 opens. Thereafter, the card 2 is transported by the rollers 4 to an exterior of the insertion port 3.

Assume, as an example of a card abnormality, a case in which someone has worked on the insertion port 3 and hence the card 2 clogs in the transport path 5 at insertion or discharge of the card 2. In a case in which although the rollers 4 attempts to rotate, the rollers 4 does not rotate, the card processing device 1 detects that the card 2 clogs at a position of the card detection sensor 6. When the device 1 detects the clogging of the card 2, a solenoid 13 for an eccentric cam draws a pin 12 disposed in a movable iron core. As a result of the movement of the pin 12, an outer periphery of an eccentric cam 10 comes into contact with a surface of the card 2. FIG. 1 shows a state in which the eccentric cam 10 is in contact with the card 2. In this state, since frictional force appears between the eccentric cam 10 and the card 2, it is prevented that the card 2 is drawn from the insertion port 3 into an external space. Only when the pin is drawn, the eccentric cam solenoid 13 conducts the drive operation.

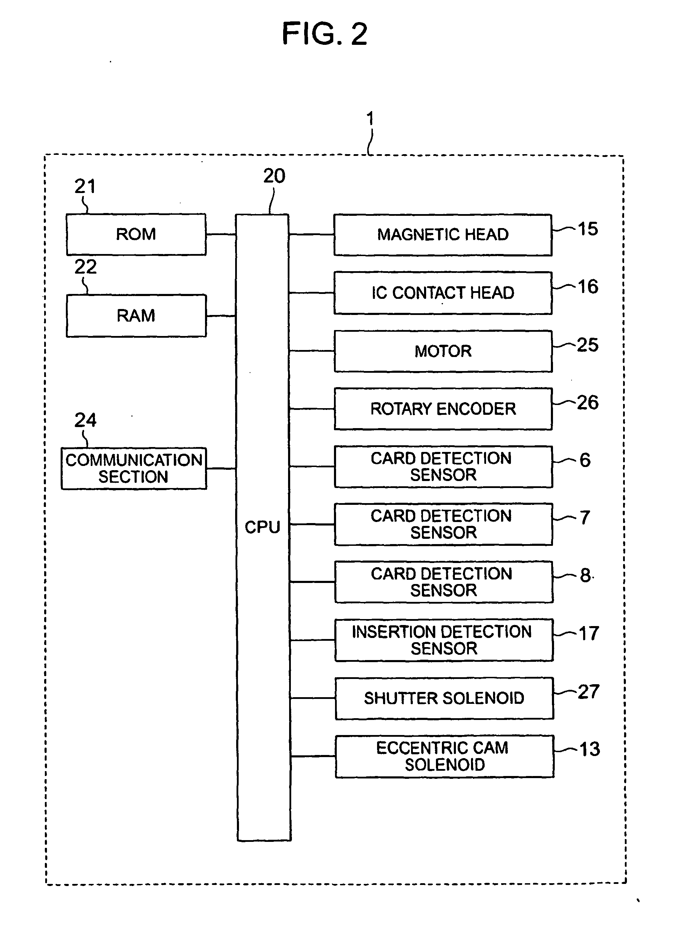

FIG. 2 is a block diagram showing an electric configuration of the card processing device 1. A central processing unit (CPU) 20 controls each section of the device 1 shown in FIG. 2 and acquires information therefrom. If the card 2 inserted in the card processing device 1 is a magnetic card, the magnetic head 15 reads magnetic information from the magnetic stripe of the magnetic card or writes information therein. If the card 2 inserted in the card processing device 1 is an IC card, the IC card contact head 16 comes into contact with the contact points. The head 16 then reads information of an IC chip of the IC card or writes information therein.

When a motor 25 conducts a drive operation, the rollers 4 mechanically linked therewith rotate. If the card 2 exists between the upper and lower rollers 4, the card 2 is transported. If the card 2 is a magnetic card, the magnetic head 15 conducts magnetic information read/write operation for the magnetic card being transported. If the card is an IC card, when the card 2 is transported to a predetermined position and the IC contact head 16 descends, the contact points of the IC card come into contact with the head 16. The head 16 then conducts information read/write operation. Thereafter, the head 16 ascends. A rotary encoder 26 detects the number of rotations of the motor 25. The card detection sensors 6, 7, and 8 detect presence or absence of the card 2 at predetermined positions on the transport path 5 of the card processing device 1. The insertion detection sensor 17 detects presence or absence of the card 2 in the insertion port 3. A solenoid for shutter 27 opens and closes the shutter 14. The eccentric cam solenoid 13 rotates, by the pin 12 attached to its movable iron core, the eccentric cam 10 about a rotary axis 11.

A read only memory (ROM) 21 stores an operation program of the CPU 20. A random access memory (RAM) 22 temporarily stores control parameters to control the respective constituent components and information obtained from the components such as the magnetic head 15 and the IC contact head 16. Moreover, the RAM 22 temporarily stores information written in the card by the magnetic head 15 and the IC contact head 16. A communication section 24 is coupled with a higher-level apparatus of the card processing device 1. An example of the higher-level apparatus is an automatic tellers machine onto which a card processing device is attached. The communication section 24 sends to the higher-level apparatus information read from the card 2 and failure information indicating failure such as the clogging of the card 2. Also, the communication section 24 receives from the higher-level apparatus information to be written in the card 2 and information such as type information of the card 2 to be processed.

Next, description will be given of processing from when the card 2 is inserted in the card processing device 1 to when the device 1 discharges the card 2 after conducting information read/writ operation. Thereafter, description will be given of the card removal prevention processing when the card clogs at insertion or discharge of the card.

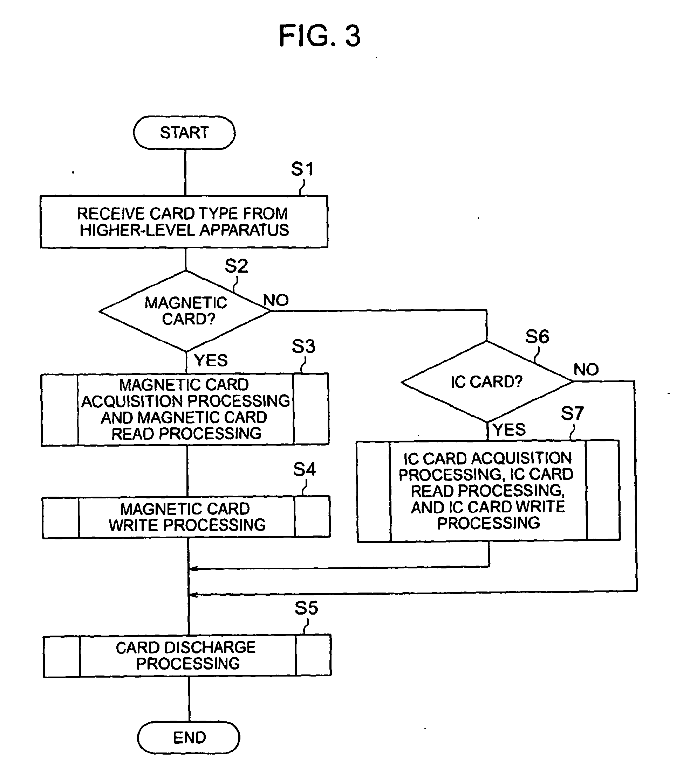

FIG. 3 is a flowchart showing an outline of card processing of the card processing device 1. In step S1, the CPU 20 receives a type of the card 2 via the communication section 24 from the higher-level apparatus. It is assumed in this case that the card 2 is of one of two types, i.e., a magnetic card and a contact-type IC card. Next, in step S2, the CPU 20 determines whether or not the received card 2 is a magnetic card. If the card is regarded as a magnetic card, the CPU 20 executes magnetic card acquisition processing in step S3. Also, the CPU 20 executes processing to write magnetic information in the magnetic card by use of the magnetic head 15. Thereafter, in step S5, the CPU 20 executes processing to discharge the card 2. Details of the card processing in these steps S3, S4, and S5 will be described later.

On the other hand, if it is determined in step S2 that the type of the received card 2 is other than a magnetic card, the CPU 20 determines in step S6 whether or not the received card 2 is a contact-type IC card. If the card 2 is regarded as an IC card, the CPU 2 executes processing to acquire the IC card in step S7. Furthermore, the CPU 20 executes information read operation and/or information write operation for the IC card. The CPU 20 then executes processing to discharge the IC card from the insertion port 3. Details of the card processing in the step S7 will be described later.

Moreover, if it is determined in step S6 that the type of the received card 2 is other than an IC card, the CPU 20 does not execute the information read and write processing. This is because the card 2 is other than a magnetic card and an IC card predetermined for the processing, that is, the CPU 20 cannot execute the card processing. Thereafter, the CPU 20 proceeds to step S5 to execute discharge processing for the card 2.

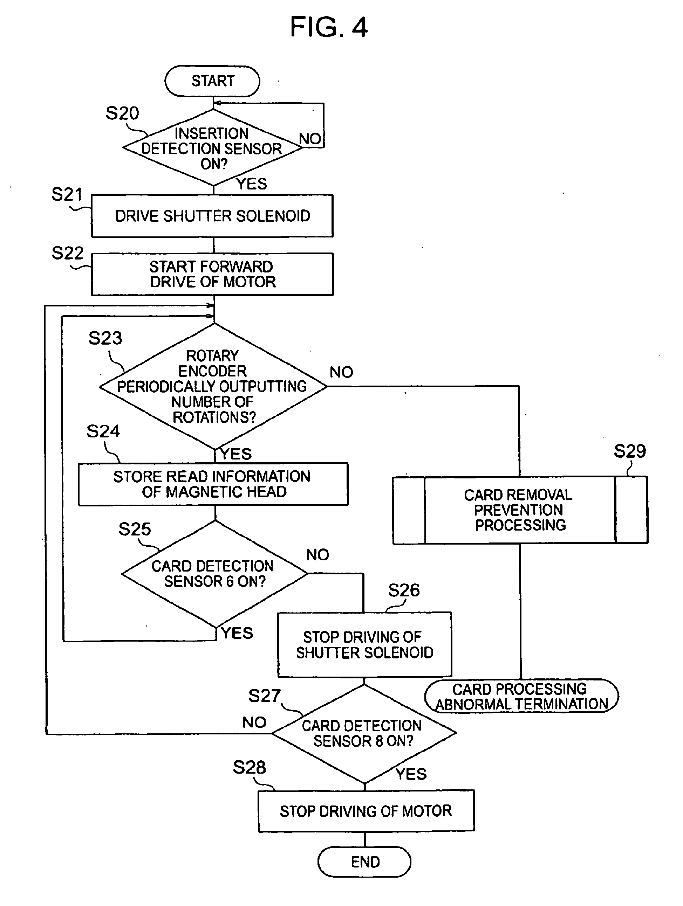

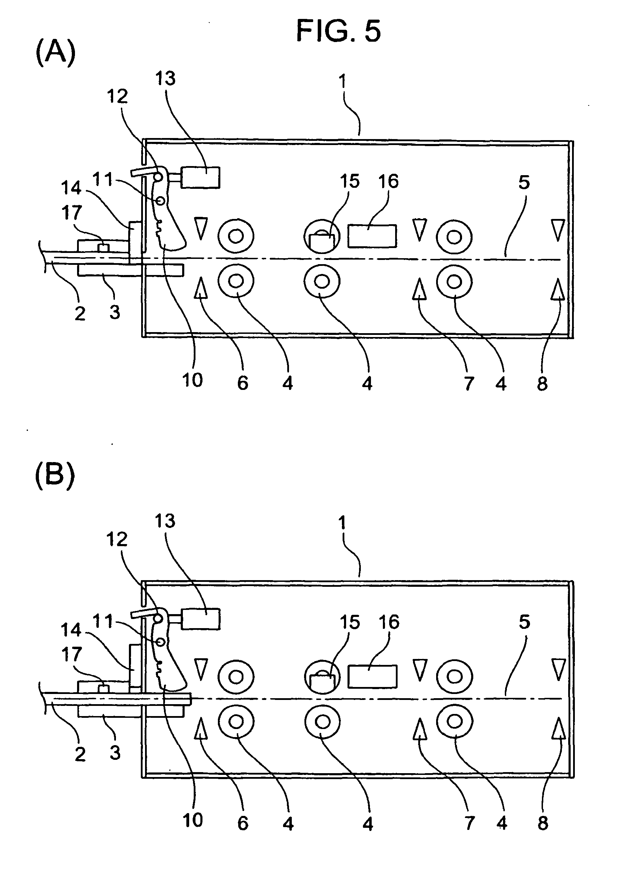

FIG. 4 is a flowchart showing in detail the magnetic card acquisition processing and the magnetic card read processing in step S3 of FIG. 3. In step S20, the insertion detection sensor 17 detects whether or not a card 2 has been inserted in the insertion port 3. FIG. 5(A) shows a state in which the card 2 has been inserted in the insertion port 3. In FIG. 5(A), the left-half portion of the card 2 is not shown. Since an end tip of the card 2 has not reached the insertion detection sensor 17, the shutter 14 is kept closed.

When the sensor 17 detects insertion of the card 2, processing goes to a next step S21. In step S21, the CPU 20 drives the shutter solenoid 27. As a result, the shutter 14 opens the transport path 5. FIG. 5(B) shows a state in which since the insertion detection sensor 17 has detected existence of the card 2, the shutter 14 opens to open the transport path 5. Additionally, this also shows a state in which the card 2 has been further inserted in the interior of the card processing device 1. Next, in step S22, the CPU 20 starts driving the motor 25 in a forward rotation. Through the forward rotation drive of the motor 25, each roller 4 linked with the motor 25 rotates in a direction to transport the card 2 to the interior of the card processing device 1. In FIG. 5, the rollers 4 try to transport the card 2 to the right side. In the magnetic card used in the embodiment, magnetic information has been recorded in a Two Frequency Coherent Phase Encoding (F2F) method. In a case of a magnetic card of the F2F method, when the magnetic card is transported at a fixed speed, the magnetic head 15 reads magnetic information from the magnetic card. Therefore, the CPU 20 controls the motor 25 to rotate at a fixed rotary speed. According to feedback control using the number of rotations of the motor 25 outputted from the rotary encoder 26, the CPU 26 keeps the rotary speed of the motor 25 fixed. In step S28, which will be described later, until the CPU 20 stops the driving of the motor 25, the CPU 20 controls the motor 25 to continuously rotate in a forward direction at a fixed speed.

In step S23, the CPU 20 determines whether or not the rotary encoder 26 periodically outputs the number of rotations of the motor 25. For example, a check is made to determine whether or not the rotary encoder 26 detects the rotations of the motor 25 in association with transmission of a drive instruction from the CPU 20 to the motor 25. If the rotary encoder 26 periodically outputs the number of rotations, it is assumed that the magnetic card is transported at a fixed speed. If the rotary encoder 26 does not periodically output the number of rotations or does not produce an output, it is assumed that the card 2 has clogged. That is, step S23 determines whether or not the card 2 has clogged. If the card 2 has not clogged, processing goes to step S24. If the card 2 has clogged, processing goes to step S29. Then, in step S24, the magnetic head 15 reads magnetic information from a magnetic stripe of the magnetic card being transported at a fixed speed. The CPU 20 acquires the obtained magnetic information and stores the information in the RAM 22. The processing of step 24 is continuously executed until the drive of the motor 25 is stopped.

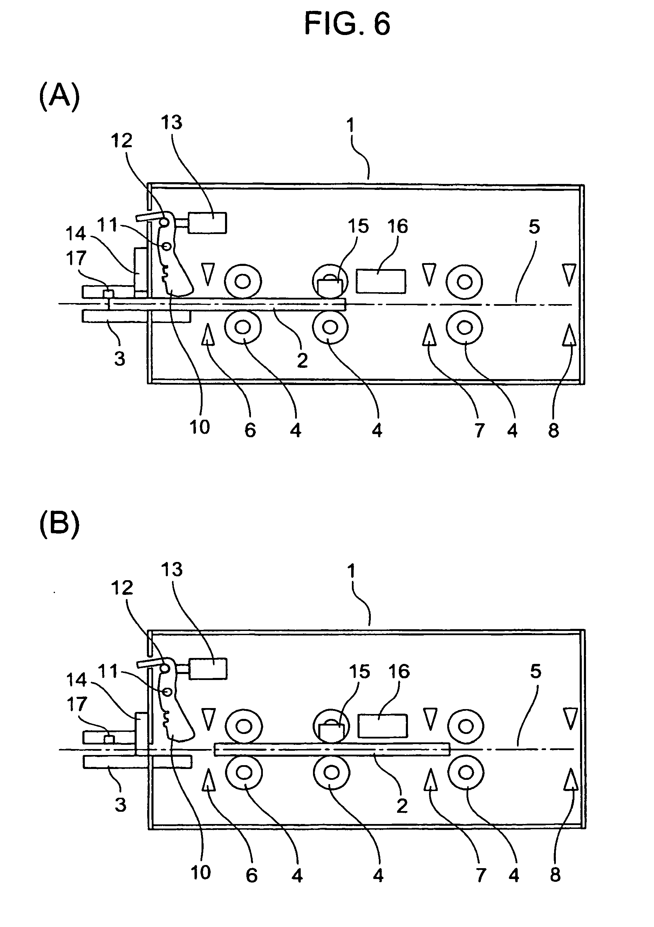

In step S25, a check is made to determine whether or not the card detection sensor 6 has detected existence of the card 2. If the card detection sensor 6 has detected the card 2, control returns to the processing of step S23. While the sensor 6 is detecting the card 2, the CPU 20 repeatedly executes processing of steps S23, S24, and S25. While the sensor 6 is detecting the card 2, the CPU 20 continuously determines whether or not the card 2 has clogged. That is, by repeatedly executing the processing of steps S23, S24, and S25, the CPU 20 determines whether or not the card 2 has clogged at the position of the card detection sensor 6. FIG. 6(A) shows a position of the card 2 when the sensor 6 detects the card 2. This also shows a state in which the magnetic head 15 is in contact with the magnetic card to read magnetic information of the magnetic stripe.

If the card detection sensor 6 does not detect existence of the card 2 in step S25, it is assumed in this state that the card 2 has passed through the insertion port 3 to be acquired in the interior of the card processing device 1. In this case, control goes to step S26 and the CPU 20 stops the driving of the shutter solenoid 27. When the driving of the solenoid 27 is stopped, the shutter 14 closes. FIG. 6(B) shows a position of the card 2 when the card detection sensor 6 does not detect existence of the card 2. This also shows a state in which the driving of the shutter solenoid 27 is stopped and the shutter 14 is closed. The processing to stop the driving of the solenoid 27 in step S26 is only once executed in the overall processing of FIG. 4.

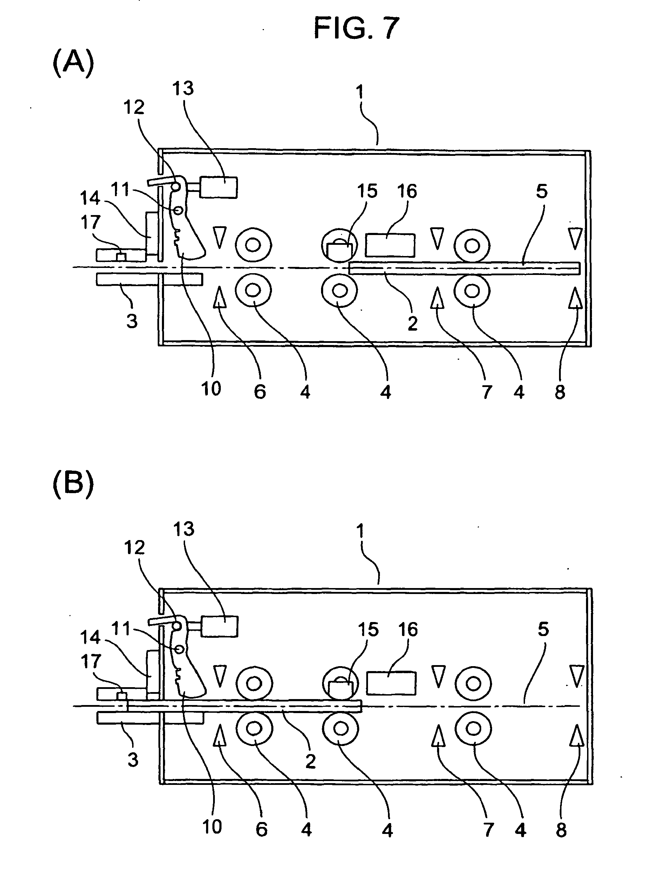

In step S27, a check is made to determine whether or not a card detection sensor 8 has detected existence of the card 2. Existence of the card 2 at a position of the sensor 8 means that the card 2 has entirely passed through the magnetic head 15. FIG. 7(A) shows a state in which a tip end of the card 2 has reached the position of the card detection sensor 8. This further shows a state that a tail end of the card 2 has passed through the magnetic head 15. When the card detection sensor 8 detects existence of the card 2, the CPU 20 stops the driving of the motor 25 in step S28. As a result, each roller 4 stops its rotation and the transportation of the card 2 is stopped. The CPU 20 transmits the magnetic information stored in the RAM 22 via the communication section 24 to the higher-level apparatus. This terminates the processing to read magnetic information of the magnetic card.

In step S27, if the card detection sensor 8 has not detected existence of the card 2, it is assumed in this state that the magnetic head 15 is in contact with the magnetic card. In other words, the magnetic information reading operation has not been completed for the magnetic card. Therefore, the process returns to the processing of step S23 and the CPU 20 continues the driving of the motor 25 to transport the card 2 and the magnetic information read processing for the magnetic card by the magnetic head 15.

Assume that a dishonest person aiming at doing wrong works on the card processing device 1 with the intention that the card 2 clogs in the card processing device 1. FIG. 7(B) shows a position of the card 2 when the card 2 has clogged. In this case, although the CPU 20 continues driving the motor 25, the rotary encoder 26 does not detect rotations of the motor 25. Therefore, in step S23, the CPU 20 determines that the rotary encoder 26 is not periodically outputting the number of rotations of the motor 25. Accordingly, the CPU 20 executes the card removal prevention processing in step S29. The CPU 20 then forcibly terminates the overall card processing shown in FIG. 3 (this is referred to as "abnormal termination" hereinbelow).

In the flowchart shown in FIG. 4, as described in conjunction with step S23, the card removal prevention processing is executed when the rotary encoder 26 does not periodically output the number of rotations. It is also possible to execute, in place of this operation, the card removal prevention processing only if the rotary encoder 26 does not periodically output the number of rotations and the card detection sensor 6 detects existence of the card 2. In the latter case, the card removal prevention processing can be executed only if the card 2 exists at the position of the card detection sensor 6.

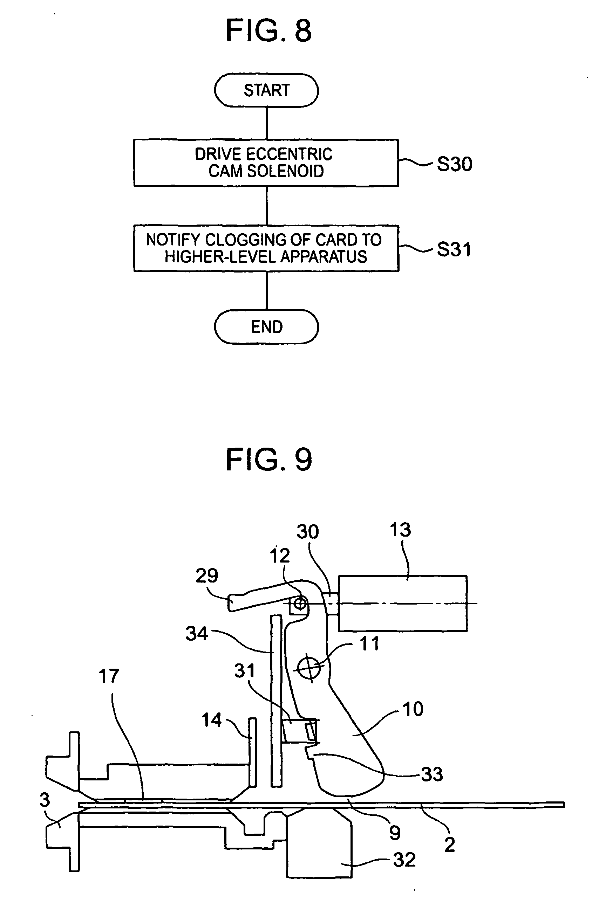

FIG. 8 is a flowchart showing in detail the card removal prevention processing in step S29. In step S30, the CPU 20 drives the eccentric cam solenoid 13. As a result, the eccentric cam 10 rotates about the rotary axis 11. Then, the outer periphery of the eccentric cam 10 comes into contact with the card 2. Consequently, it is prevented that the card 2 is removed from the insertion port 3. Thereafter, in step S31, the CPU 20 notifies failure information that the card 2 has clogged in the transport path 5, via the communication section 24 to the higher-level apparatus.

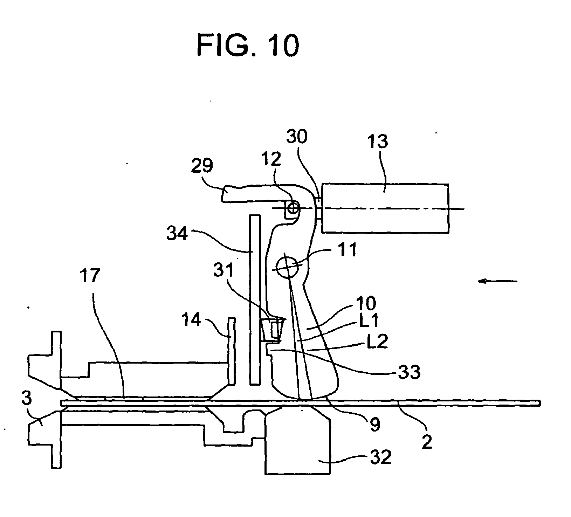

Next, description will be given in detail of a first embodiment of a preventive mechanism by referring to FIGS. 9 and 10. FIGS. 9 and 10 are detailed magnified diagrams of the eccentric cam 10, the eccentric cam solenoid 13, and the card 2 existing in the transport path 5. FIG. 9 shows a state in which the solenoid 13 does not conduct a drive operation. As shown in FIG. 9, distance from the rotary axis which is a center of rotation of the cam 10 to the outer periphery 9 facing the card 2 is variable. That is, the rotary axis 11 is eccentric with respect to the outer periphery 9 facing the card 2. In the state of FIG. 9, since the distance to the outer periphery 9 of the eccentric cam 10 facing the card 2 is short, the outer periphery 9 of the cam 10 is separated from the card 2. In FIG. 9, the lower-left outer periphery 9 of the cam 10, i.e., the outer periphery 9 facing the card 2 is formed in the shape of substantially an arc. Therefore, when the eccentric cam 10 is rotated clockwise, the outer periphery 9 of the eccentric cam 10 comes into contact with a surface of the card 2.

A spring 31 is attached onto a wall 34. When the eccentric cam 10 rotates clockwise, the spring 31 functions to rotate the eccentric cam 10 counterclockwise. Consequently, when the eccentric cam solenoid 13 does not conduct a drive operation, the spring 31 lifts the eccentric cam 10 such that the cam 10 is separated from a surface of the card 2. In this state, the outer periphery 9 of the cam 10 is separated from the card 2. This hence prevents, when the eccentric cam solenoid 13 does not conduct a drive operation, occurrence of an event in which the outer periphery 9 of the eccentric cam 10 comes into contact with a surface of the card 2 to transport the card 2. When the eccentric cam solenoid 13 conducts a drive operation, since its drive force is more than force of the spring 31, the eccentric cam 10 rotates and comes into contact with a surface of the card 2.

FIG. 10 shows a state in which the solenoid 13 conducts a drive operation. As a result of the drive operation of the solenoid 13, the movable iron core 30 moves to the right side along a dot-dash-line in FIG. 10. As the iron core 30 moves, the pin 12 attached thereto also moves to the right side. When the pin 12 moves, the eccentric cam 10 engaged with the pin 12 rotates clockwise about the rotary axis 11. FIG. 10 shows a state in which the eccentric cam 10 has rotated by the drive operation of the eccentric cam solenoid 13. In this situation, as compared with the case of FIG. 9, since the distance to the outer periphery 9 of the cam 10 facing the card 2 is longer as compared with the case of FIG. 9, the outer periphery 9 of the eccentric cam 10 is separated from a surface of the card 2. When the outer periphery 9 is in contact with the card 2, the distance from the rotary axis 11 to the contact point is L1. In this state, the eccentric cam 10 exerts pushing force onto the surface of the card 2. For the pushing force to fully function onto the card 2, a stand 32 below the card 2 supports the card 2. This prevents the card 2 from bending or deflecting due to elasticity thereof.

Since the card 2 is in contact with the outer periphery 9 of the eccentric cam 10 and hence frictional force functions therebetween, even if the dishonest person aiming at doing a dishonest thing desires to remove the clogged card 2 from the insertion port 3 by use of a tool or the like, he or she cannot easily remove the card 2. As shown in FIG. 10, the state in which the outer periphery 9 of the eccentric cam 10 is in contact with a surface of the card 2 is referred to as a contact state for convenience.

The eccentric cam solenoid 13 can draw the pin 12 to rotate the eccentric cam 10 by force necessary to bring the outer periphery 9 of the eccentric cam 10 into contact with a surface of the card 2. The solenoid 13 applies force to the cam 10 in a direction parallel to the card transport direction. Therefore, due to the applied force, the cam 10 rotates about the rotary axis 11 to apply force to the card 2 in a direction perpendicular to the card transport direction.

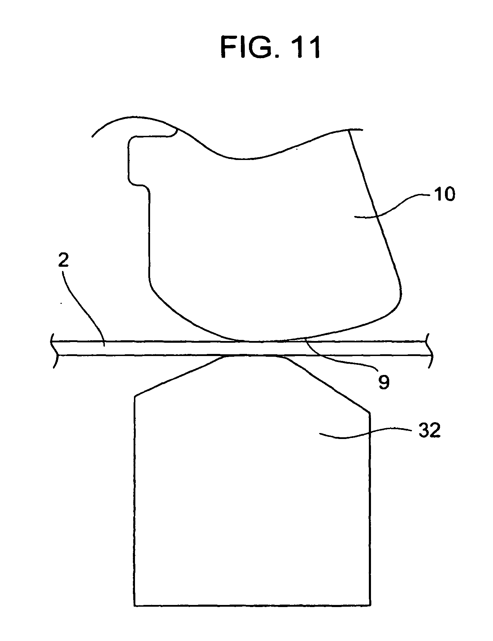

FIG. 11 shows a magnified view of the eccentric cam 10, the card 2, and the stand 32 in the contact state of FIG. 10. Part of the outer periphery 9 of the eccentric cam 10 is in contact with a surface of the card 2. To prevent the card 2 from bending due to the pushing force from the eccentric cam 10, the stand 32 below the card 2 supports the card 2.

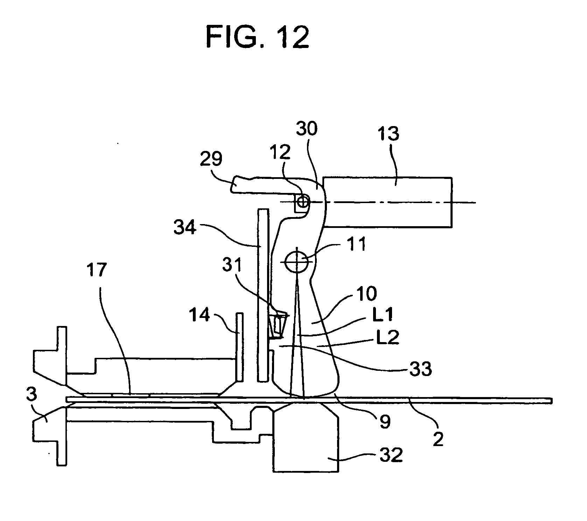

Assume that the dishonest person aiming at doing wrong applies stronger force to draw the card 2. In this situation, when the person applies the stronger force to draw the card 2, the eccentric cam 10 further rotates clockwise about the rotary axis due to the frictional force between the card 2 and the cam 10. Then, the outer periphery portion of the cam 10 in contact with the card 2 moves in a direction almost equal to the direction to draw the card 2. In this state, since the eccentric cam 10 is rotated by the force to draw the card 2, the eccentric cam solenoid 13 does not apply force to the eccentric cam 10. FIG. 12 shows this state.

The eccentric cam 10 is eccentric with respect to the rotary axis 11. Therefore, in FIG. 10, the distance from the rotary axis 11 to the outer periphery portion of the cam 10 in contact with the card 2 is elongated. The distance from the rotary axis 11 to the contact position of the outer periphery 9 in the contact state is L2. The distance L2 is longer than the distance L1. Resultantly, much stronger pushing force is applied to a surface of the card 2. This consequently increases the frictional force between the eccentric cam 10 and the card 2. Therefore, stronger force is required to draw the card 2, which makes it difficult to draw the card 2.

As shown in FIG. 12, since an attempt has been made to draw the card 2, the card 2 is moved slightly to the left side. Moreover, since the eccentric cam 10 is further rotated by the attempt to draw the card 2, the cam 10 is separated from the pin 12. To prevent an event in which the eccentric cam 10 further rotates and the outer periphery 9 of the cam 10 is separated from the surface of the card 2, a projection 33 is disposed in the eccentric cam 10. When the projection 33 buts the wall 34 of the card processing device 1, the rotation of the cam 10 stops. As shown in FIG. 12, the state in which the outer periphery 9 of the eccentric cam 10 is pushed into the surface of the card 2 is called a fixed state for convenience.

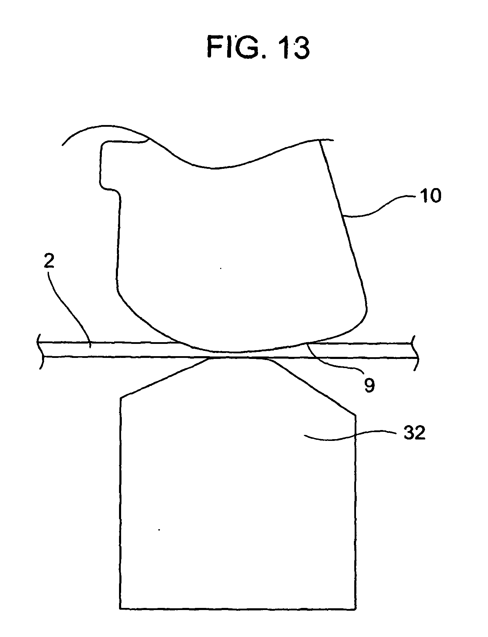

FIG. 13 shows a magnified view of the eccentric cam 10, the card 2, and the stand 32 in the fixed state. Part of the outer periphery 9 of the eccentric cam 10 is in contact with a surface of the card 2 and the cam 10 encroaches on the card 2. Therefore, if it is desired to draw the card 2, the eccentric cam 10 also moves and tries to rotate in association with the card 2. However, since the projection 33 abuts the wall 34 as shown in FIG. 12, the eccentric cam 10 does not rotate. That is, removal of the card 2 is difficult, and when an attempt is made to forcibly remove the card 2, the card 2 is broken.

On the other hand, it is easy to push the card 2 from the insertion port 3 into the interior of the card processing device 1. When the card 2 is pushed from the port 3 into the interior of the device 1, the eccentric cam 10 rotates counterclockwise about the rotary axis 11 by the frictional force between the card 2 and the outer periphery 9 of the cam 10. It is only necessary that the eccentric cam solenoid 13 can apply force stronger than that of the spring 31. Therefore, since the eccentric cam 10 rotates counterclockwise by pushing the card 2 from the insertion port 3, the card 2 easily moves into the interior of the card processing device 1. As a result, since the card 2 can be easily acquired in the interior of the device 1, the device can keep safety against an action to illegally remove the card 2.

Also, if the card 2 is a magnetic card, the eccentric cam 10 can be arranged over the magnetic stripe of the magnetic card. In this case, in a state in which the eccentric cam 10 is in contact with the magnetic card, the cam 10 encroaches on the magnetic stripe of the magnetic card. When the card is drawn in such a state, the magnetic stripe of the card is defected or is broken. Therefore, even when the dishonest person aiming at doing wrong stoles the magnetic card, the magnetic information of the magnetic stripe cannot be reproduced.

After the preventive mechanism operates, the CPU 20 sends in step S31 of FIG. 8 failure information of the clogging of the card to the higher-level apparatus. The apparatus notifies, to the person in charge of the card processing device 1, occurrence of the clogging of the card in the card processing device 1. The person in charge having received the notification opens a lid of the higher-level apparatus in which the card processing device 1 is installed, then the overall unit of the insertion port 3, the shutter, the wall 34, and a lever 9 of the eccentric cam 10 of the device 1 are exposed. The person in charge then stops the driving of the eccentric cam solenoid 13. When the person thereafter pushes the lever 29 shown in FIG. 12 downward, the eccentric cam 10 rotates counterclockwise and the outer periphery 9 of the cam 10 is separated from the card 2. This resultantly releases the fixed state and the contact state between the eccentric cam 10 and the card 2. The person in charge can then remove the clogged card 2 from the insertion port 3 to return the card 2 to the user. The lever 29 is exposed from the wall 34 of the card processing device 1. Therefore, the person in charge can release the card removal prevention state due to the mechanism such as the eccentric cam 10 only by opening the lid of the higher-level apparatus covering the card processing device 1 without opening the lid of the device 1 and then pushing the lever 29.

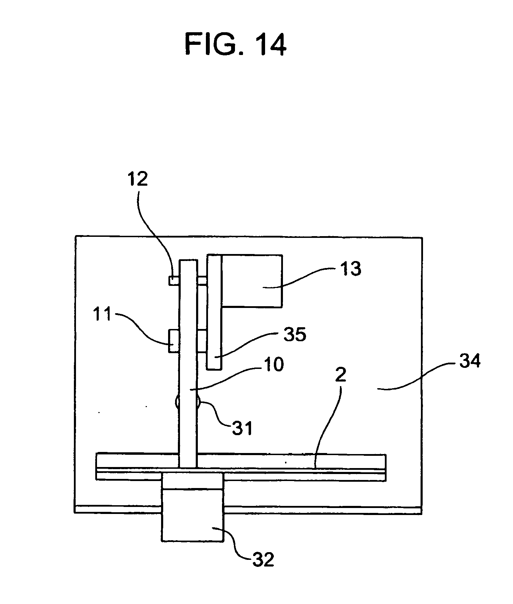

FIG. 14 is a side view of the eccentric cam 10 viewed from an arrow direction of FIG. 10. The cam eccentric 10 has thickness resistive against the pushing force of the outer peripheral 9 of the cam 10 onto the card 2 caused by the force of movement of the pin 12 due to the driving of the eccentric cam solenoid 13. By making the thickness of the eccentric cam 10 larger, it is possible to increase friction between the outer peripheral 9 of the cam 10 and the card 2. The rotary axis 11 and the solenoid 13 are attached onto an attaching plate 35. The plate 35 is attached onto the wall 34. To easily understand the eccentric cam 10, the attaching plate 35 is not shown in FIG. 10. To prevent deflection of the eccentric cam 2, the stand 32 is formed to be thicker than the cam 10.

The position at which the eccentric cam 10 comes into contact with the card 2 can be arbitrarily changed by changing the attaching position of the cam 10. If the card 2 is a magnetic card, the eccentric cam 10 can be attached at a position where the magnetic stripe passes. As a result, after the card removal prevention processing shown in step S29 is executed, when the dishonest person aiming at an illegal card use attempts to draw the card, the magnetic stripe of the magnetic card having recorded magnetic information is broken. That is, even if the magnetic card is drawn, it is possible to prevent the use of the magnetic card by the dishonest person. Also, if the card 2 is an IC card, the eccentric cam 10 can be attached to a contact position of the IC card or at a position where the IC chip passes. As a result, when the IC card is forcibly drawn, the contact point of the IC card or the IC chip is broken. Consequently, as in the case of the magnetic card described above, it is possible to prevent the use of the IC card by the dishonest person.

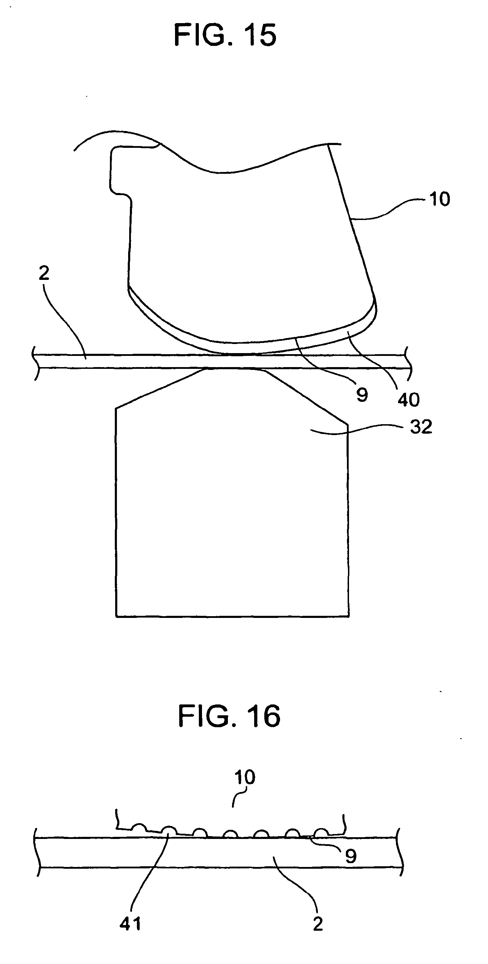

By fixing a non-slippery substance such as rubber onto the outer peripheral 9 of the eccentric cam 10, the frictional force between the cam 10 and the card 2 can be increased. FIG. 15 shows an eccentric cam 10 with rubber 40 fixed onto the outer periphery 9 thereof.

Moreover, by disposing depressions and projections in the outer peripheral 9 of the eccentric cam 10, projections of the cam 10 encroach on a surface of the card 2 and hence the frictional force between the cam 10 and the card 2 can be increased. FIG. 16 shows a magnified view of the outer peripheral 9 of cam 10 when depressions and projections 41 are disposed in the outer peripheral 9 and the card 2 in contact with depressions and projections in the outer peripheral 9. It is favorable that the interval between depressions and projections is less than the length of the outer peripheral 9 of the eccentric cam 10 in contact with the card 2 when the device 1 is changed from the contact state to the fixed state.

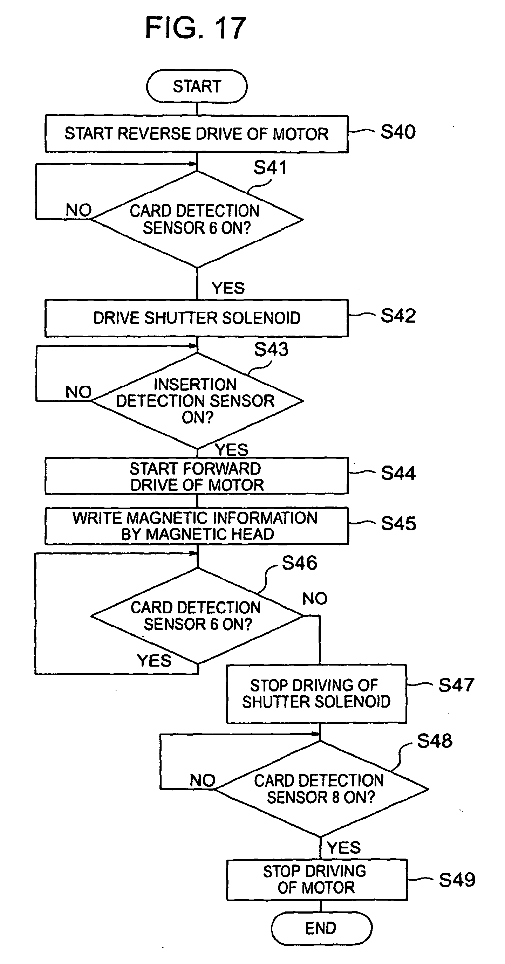

Next, description will be given in detail of the magnetic card write processing shown in step S4 of FIG. 3. FIG. 17 is a flowchart showing details of the magnetic card write processing in a magnetic card. When the processing of step S3 of FIG. 3 is finished, the magnetic card is stopped on the right end of the transport path 5 as shown in FIG 7(A). To return the magnetic card to the side of the insertion port 3 of the transport path 5, the CPU 20 starts reverse driving of the motor 25 in step S40. Each roller 4 linked with the motor 25 then rotates to transport the magnetic card to the side of the insertion port 3. When the magnetic card is transported to the side of the insertion port 3 and the card detection sensor 6 detects existence of the magnetic card in step S41, the CPU 20 drives the shutter solenoid 27 in step S42. This opens the shutter 14. Therefore, the magnetic card is transported to the insertion port 3, and hence it is possible in subsequent processing to write magnetic information beginning at a first point of the magnetic card. FIG. 6(A) shows the position of the magnetic card in this situation. Incidentally, by elongating the transport path 5 of the card processing device 1, it is possible, without opening the shutter 14, to transport the magnetic card to a position at which magnetic information can be written beginning at a first point of the magnetic card.

When the insertion detection sensor 17 detects existence of the card in step S43, the CPU 20 starts forward driving of the motor 25 in steps S44. Next, in step S45, the CPU 20 receives via the communication section 24 from the higher-level apparatus information to be written in the magnetic card and then stored the information in the RAM 22. The magnetic head 15 then writes, according to information stored in the RAM 22, magnetic information in the magnetic card being transported. The writing of magnetic information is continuously conducted only during a period of time in which the CPU 20 supplies a write signal to the magnetic head 15. If the card detection sensor 6 does not detect existence of the magnetic card in step S46, the magnetic card does not exist at the position of the shutter 14. Therefore, the CPU 20 stops the driving of the shutter solenoid 27 in step S47. This closes the shutter 14. FIG. 6(B) shows the position of the card 2 in this situation. Thereafter, if the magnetic card is continuously transported and the card detection sensor 8 detects existence of the magnetic card in step S48, the CPU 20 stops the driving of the motor 25 in step S49. As a result, the rotation of each roller 4 is stopped and the transportation of the magnetic card is stopped. FIG. 7(A) shows the position of the magnetic card in this situation. This terminates the write processing of magnetic information in the magnetic card. In this connection, a point of time for the CPU 20 to receive information from the higher-level apparatus to be written in the magnetic card is an arbitrary point of time only before the magnetic head 15 starts the writing operation in step S45.

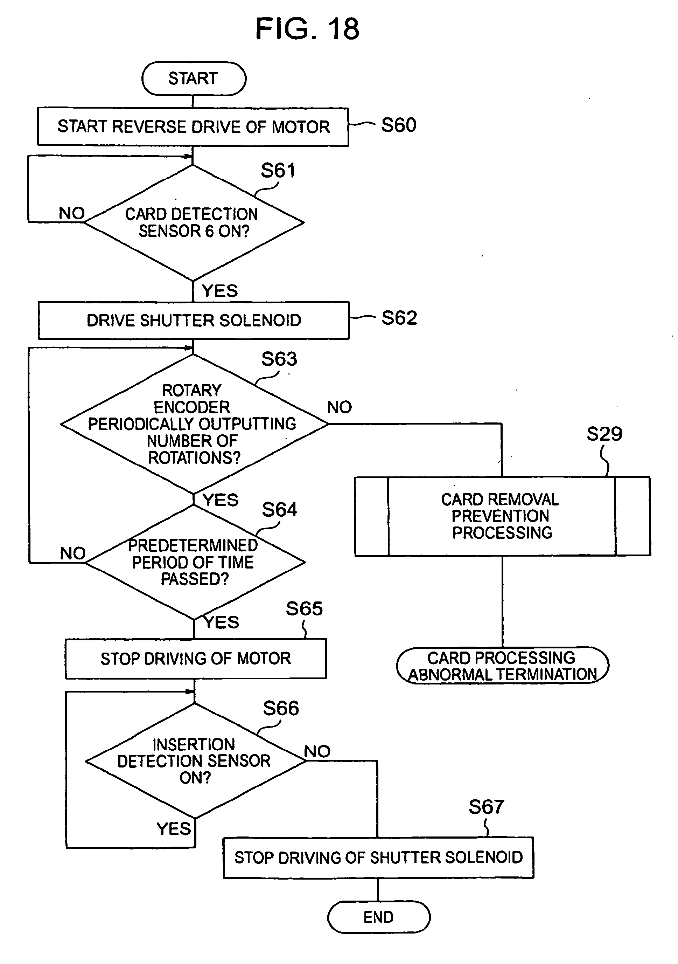

Next, description will be given in detail of the card discharge processing shown in step S5 of FIG. 3. FIG. 18 is a flowchart showing details of the card discharge processing. At a point of time when the processing of step S4 of FIG. 3 is finished, the card is stopped at the right end of the transport path 5 as shown in FIG. 7(A). To return the card 2 to the side of the insertion port 3 to discharge the card 2, the CPU 20 starts reverse driving of the motor 25 in step S60. Each roller 4 linked with the motor 25 then rotates to transport the card 2 to the side of the insertion port 3. The driving of the motor 25 is continuously conducted until the driving of the motor 25 is stopped in step S65, which will be described later.

When the card 2 is transported to the side of the insertion port 3 and the card detection sensor 6 detects existence of the card 2 in step S61, the card 2 is in the proximity of the insertion port 3. The CPU 20 then drives the shutter solenoid 27 in step S62. This opens the shutter 14 and the card 2 on the transport path 5 can be discharged from the insertion port 3.

In step S63, the CPU 20 determines whether or not the rotary encoder 26 periodically outputs the number of rotations of the motor 25. Therefore, as in the step S23, the CPU 20 can determine whether or not the card 2 has clogged at the position of the card detection sensor 6.

If the CPU 20 determines in step S63 that the rotary encoder 26 does not periodically output the number of rotations of the motor 25, i.e., that the card 2 has clogged, the CPU 20 executes the card prevention processing equal to that of step S29 described above. Since the card prevention processing is equal to that of step S29 described above, description thereof will be avoided. Thereafter, the CPU 20 abnormally terminates the card processing.

On the other hand, if the CPU 20 determines in step S63 that the rotary encoder 26 periodically outputs the number of rotations of the motor 25, i.e., that the card 2 has not clogged, the CPU 20 determines in step 64 whether or not a predetermined period of time has passed from the detection of existence of the card 2 by the card detection sensor 6. For the discharge of the card 2 from the insertion port 3, the card is being transported toward the insertion port 3 at a fixed speed by the rotation of the rollers 4. Therefore, the period of time from when the first end of the card 2 along the discharge direction passes the position of the card detection sensor 6 to when a last end thereof along the discharge direction passes the rollers 4 nearest to the insertion port 3 is beforehand determined. Consequently, the period of time is set to the predetermined period of time. In a case in which any abnormality such as the clogging of the card 2 in the card processing device 1 does not occur, if the predetermined period of time lapses, the card 2 has already passed through all rollers 4, and hence the CPU 20 stops the driving of the motor 25 in step S65. This stops the rotation of each roller 4 and the transportation of the card 2 is stopped. If the predetermined period of time does not lapse, the card 2 has not passed through all rollers 4, and hence the CPU 20 continues the transportation of the card 2 by the rollers 4.

In this situation, the driving of the motor 25 is stopped by measuring time. In another embodiment, it is also possible to increase the number of card detection sensors on the transport path such that the driving of the motor 25 is stopped when the card 2 passes a predetermined position.

When the CPU 20 stops the driving of the motor 25 in step S65, the insertion detection sensor 17 determines in step S66 whether or not the card 2 exists. If it is determined in step S66 that the sensor 17 does not detect existence of the card 2, it is indicated that the card 2 does not exist in the insertion port 3. It namely indicates that failure has not occurred and the user have removed the card 2. In this case, the CPU 20 stops the driving of the shutter solenoid 27 in step S67. This closes the shutter 14 and the card discharge processing is terminated.

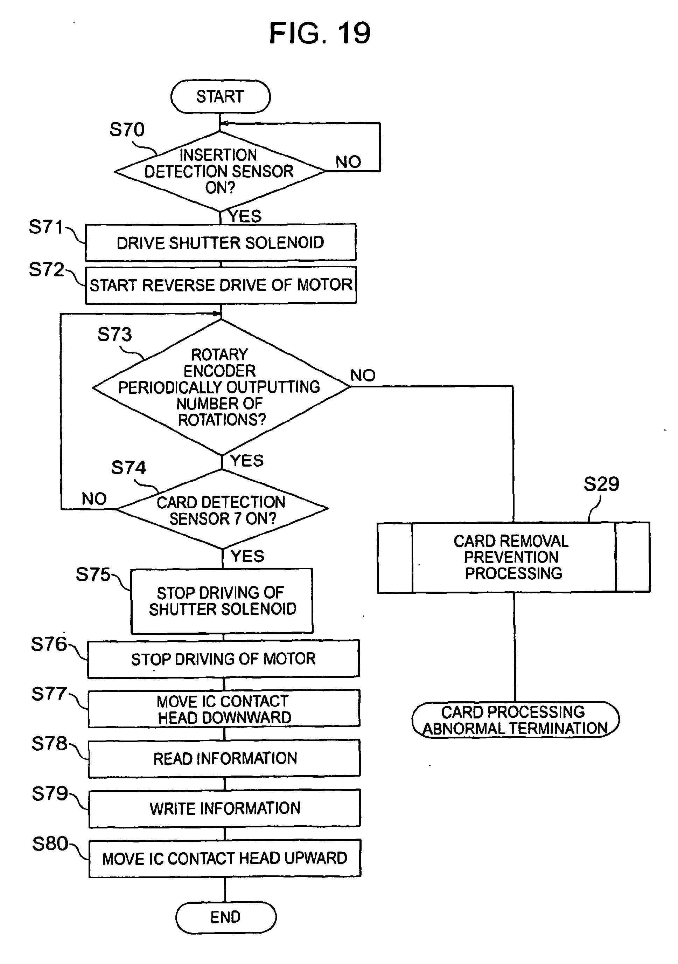

Next, description will be given in detail of the IC card acquisition processing, IC card read processing, and IC card write processing shown in step S7 of FIG. 3. FIG. 19 is a flowchart showing the processing in detail. At a point of time when the processing of step S6 of FIG. 3 is finished, the card 2 is in a state in which the first end of the card 2 is inserted in the insertion port 3 as shown in FIG. 5(A).

In step S70, the insertion detection sensor 17 determines whether or not an IC card has been inserted. If it is determined that the IC card has been inserted, the CPU 20 drives the shutter solenoid 27. in step S71. This opens the shutter 14, and hence the IC card can be inserted in the interior of the card processing device 1. The CPU 20 then starts forward driving of the motor 25 in step S72. As a result, each roller 4 linked with the motor 25 rotates to transport the IC card from the insertion port 3 to the interior of the card processing device 1.

The CPU 20 determines whether or not the rotary encoder 26 periodically outputs the number of rotations of the motor 25 in step S73. Therefore, as in step S23 described above, the CPU 20 can determine whether or not the IC card has clogged in the vicinity of the card detection sensor 6.

If the CPU 20 determines in step S73 that the rotary encoder 26 does not periodically output the number of rotations of the motor 25, i.e., that the card 2 has clogged, the CPU 20 executes the card prevention processing equal to that of step S29 described above. Since the card prevention processing is equal to that of step S29 described above, description thereof will be avoided. Thereafter, the CPU 20 abnormally terminates the card processing.

On the other hand, if the CPU 20 determines in step S73 that the rotary encoder 26 periodically outputs the number of rotations of the motor 25, i.e., that the card 2 has not clogged, the CPU 20 determines in step 74 whether or not the card detection sensor 7 has detected existence of the IC card. The card detection sensor 7 is arranged such that when the first end of the IC card along the insertion direction reaches the position of the card detection sensor 7, contact points of the IC card reach the position of the IC contact head 16.

If the card detection sensor 7 does not detect the IC card, control returns to step S73 to determine whether or not the IC card has clogged. If the sensor 7 detects existence of the IC card, the CPU 20 stops the driving of the shutter solenoid 27 in step S75. This closes the shutter 14. Thereafter, the CPU 20 stops the driving of the motor 25 in step S76. As a result, the rotation of each roller 4 is stopped and the transportation of the IC card is stopped. In this situation, the contact points of the IC card are placed opposing the IC contact head 16.

In step S77, to bring the IC contact head 16 into contact with the contact points of the IC card, the CPU 20 lowers the IC point head 16. The CPU 20 then reads in step S78 information from the IC chip of the IC card. The CPU 20 stores the obtained information in the RAM 22. Then, the CPU 20 transmits the information stored in the RAM 22 via the transmission section 24 to the higher-level apparatus. The CPU 20 then receives write information in step S79 via the transmission section 24 from the higher-level apparatus to store the write information in the RAM 22. The CPU 20 thereafter writes the received information in the IC chip of the IC card. When the writing is finished, control goes to step S80 and the CPU 20 makes the IC contact head 16 ascend to separate the head 16 from the contact points of the IC card. This terminates the processing of the IC card. Control then goes to the processing of step S5 shown in FIG. 3 to execute the IC card discharge processing.

### <Second embodiment>

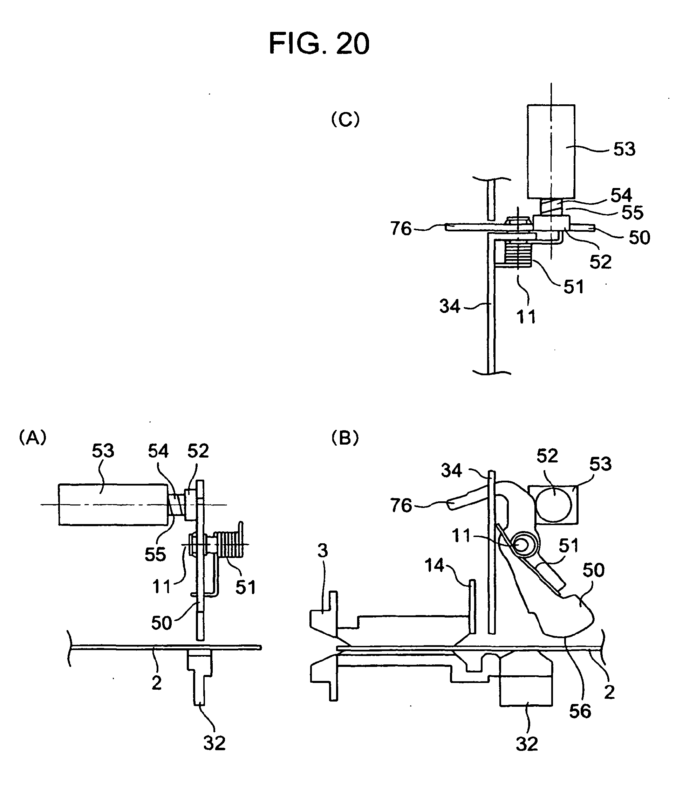

Next, description will be given of a second embodiment of the preventive mechanism. In the second embodiment, even if power failure occurs when the preventive mechanism is in operation and is preventing the removal of the card 2, the removal of the card 2 from the insertion port 3 of the card processing device 1 is prevented. FIG. 20 shows the second embodiment of the preventive mechanism. FIG. 20(A) is a front view of the preventive mechanism. For easy understanding of an eccentric cam 50, the wall 34 is not shown. FIG. 20(B) is a side view of the preventive mechanism. FIG. 20(C) is a top view of the preventive mechanism. The parts common to those of the preventive mechanism described in conjunction with FIGS. 9 and 10 are assigned with the same numbers.

The eccentric cam 50 is at a position apart from a surface of the card 2. The eccentric cam 50 is arranged to rotate about the rotary axis 11. As shown in FIG. 20(A), a lower section in a reverse L shape of a torsion spring 51 engages with the eccentric cam 50 such that the spring 51 applies force to the cam 50 to rotate the cam 50 clockwise. An upper section of the torsion spring 51 abuts the wall 34. An eccentric cam solenoid 53 includes a pin 52. In FIG. 20(B), the pin 5 abuts an upper section of the eccentric cam 50. This prevents the cam 50 from rotating clockwise about the rotary axis 11.

A coil spring 55 is disposed around a movable iron core 54. In the state of FIG. 20, the eccentric cam solenoid 53 does not conduct a drive operation. In this situation, the coil spring 55 is in an elongated state.

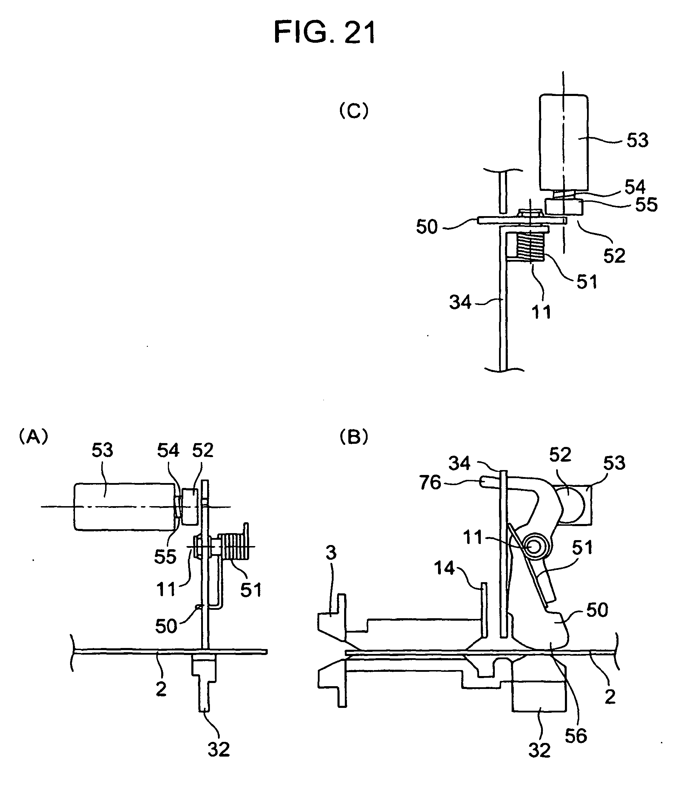

FIG. 21 shows a state in which the solenoid 53 conducts a drive operation. When the solenoid 53 conducts a drive operation, the movable iron core 54 is drawn toward an interior of the solenoid 53. This makes the pin 52 move to an upper side as shown in FIG. 21(C). Then, the coil spring 55 contracts. A side surface of the pin 52 then is apart from a side surface of the cam 50. This removes hindrance which hinders force that causes the cam 50 to rotate clockwise. As a result, as shown in FIG. 21(B), due to the force of the coil spring 51, the eccentric cam 50 rotates clockwise about the rotary axis 11 and an outer periphery 56 of the cam 50 comes into contact with the card 2.

To make the side surface of the pin 52 easily separate from that of the eccentric cam 50, it is favorable that frictional force between the cam 50 and the pin 52 is weak. For this purpose, the frictional force can be reduced by attaching a roller on the side surface of the cam 50. Moreover, in place of the arrangement of a roller on the side surface of the eccentric cam 50, a roller may be disposed on the pin 52.

In the state of FIG. 21, if an attempt is made to draw the card 2, frictional force appears between the card 2 and the eccentric cam 50. This makes the cam 50 further rotate clockwise. Moreover, since the eccentric cam 50 is eccentric, the outer periphery 56 of the cam 50 encroaches on a surface of the card 2. It is accordingly difficult to draw the card 2.

On the other hand, in the state of FIG. 21, if an attempt is made to insert the card 2 in the interior of the card processing device 1, the card 2 can be easily inserted. Moreover, an attempt can also be made to acquire by the rollers 4 the card into the interior of the card processing device 1. This is because the force to cause the eccentric cam 50 to rotate clockwise is only the force produced by the torsion coil spring 51.

Assume that power failure occurs in the state of FIG. 21. Due to the power failure, the driving of the eccentric cam solenoid 53 is stopped. In this case, the coil spring attached around the movable iron core 54 will expand from the contacted state. However, since the eccentric cam 50 exists before the pin 52 as shown in FIG. 21(C), the pin 52 cannot return to the original position as shown in FIG. 20. Consequently, the cam 50 is continuously in contact with the card 2 by the force of the torsion coil spring 51. As a result, even if power failure occurs, the state to prevent the removal of the card 2 is retained. The preventive mechanism drives the eccentric cam solenoid 53 only when the mechanism starts its operation. Once the preventive mechanism starts the operation, the state is kept by the force of the torsion coil spring 51, and hence even if power failure occurs, the mechanism is not affected by the power failure.

To release the state of FIG. 21 in which the preventive mechanism is in operation, it is only necessary to draw a lever 76 to the left side in FIG. 21(B). This causes the eccentric cam 50 to rotate counterclockwise. Then, an upper-right section of the cam 50 enters a state not to hinder the front of the pin 52. In this situation, the pin 52 darts out downward as shown in FIG. 20(C). Thereafter, by releasing the lever 76, the eccentric cam 50 attempts to rotate clockwise due to the force of the torsion coil spring 51. However, since the side surface of the eccentric cam 50 comes into contact with that of the pin 52, the cam 50 does not rotate clockwise. As a result, the cam 50 is apart from the surface of the card 2. Consequently, the eccentric cam 50 is in the state shown in FIG. 20(B).

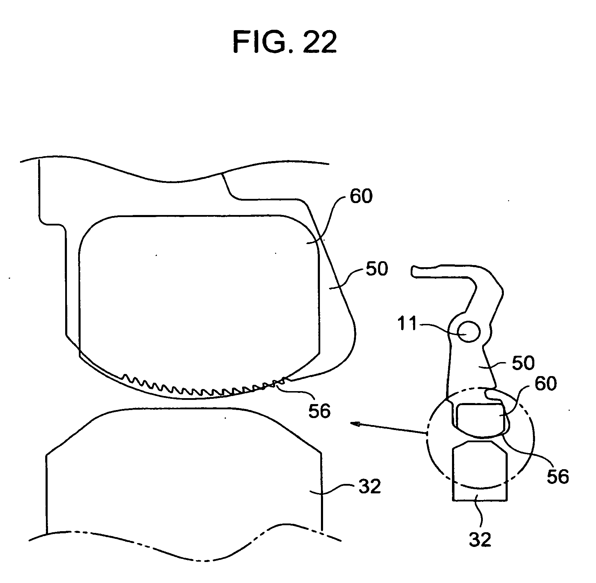

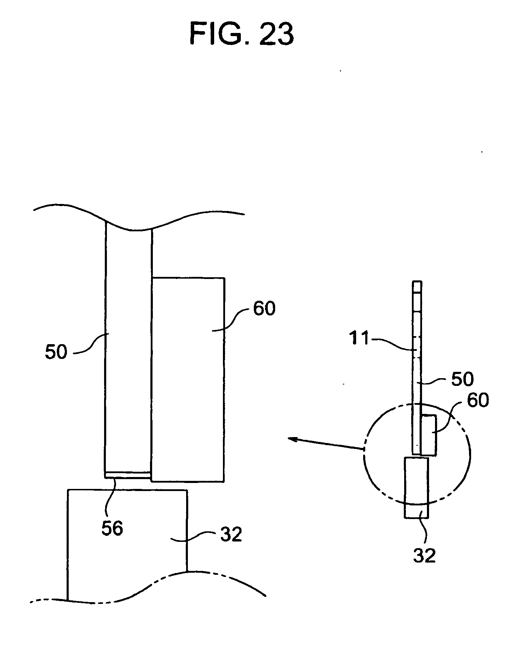

FIG. 22 shows a situation in which rubber 60 is attached adjacent to the eccentric cam 50. FIG. 23 shows a front view of the cam 50 with the rubber 60 attached thereto. The rubber 60 projects from the outer periphery 56 of the eccentric cam 50 into a lower side thereof. In the side view shown in FIG. 22, the outer periphery 56 is hence concealed on the rear side of the rubber 60. In this connection, saw-toothed depressions and projections are disposed in the outer periphery. Therefore, it is the rubber 60 that first comes into contact with the card 2. The rubber 60 results in strong frictional force between the card 2 such as a magnetic card and an IC card and the rubber 60. That is, if an attempt is made to draw the card 2 in the state in which the rubber 60 is in contact with a surface of the card 2, the eccentric cam 50 rotates together with the rubber in association with the movement of the card 2. Moreover, since the eccentric cam 50 is eccentric, the rubber 60 and the cam 50 push the surface of the card 2. Then, the rubber 60 sinks due to its elasticity and projections of the depression and projection section in the outer periphery 56 of the cam 50 encroach on the surface of the card 2. Resultantly, when an attempt is made to draw the card 2 after the preventive mechanism starts its operation, the eccentric cam 50 with the rubber 60 attached thereto easily follows the movement of the card 2. It therefore ensures that the eccentric cam 50 rotates clockwise to prevent the removal of the card 2.

### <Third embodiment>

Next, description will be given of the third embodiment of the preventive mechanism. After the preventive mechanism starts its operation, the person in charge opens the lid of the higher-level apparatus such as an automatic teller machine and the door of the card processing device 1 to remove the clogged card 2. However, there possibly occurs a case in which after the removal of the card 2, the person in charge forgets releasing the operation of the preventive mechanism. In the third embodiment, when the person in charge removes the card 2 after the operation of the preventive mechanism, the shutter 14 does not open until the operation of the preventive mechanism is released. As a result, the card 2 cannot be inserted in the card processing device 1 unless the preventive mechanism is released, that is, only after the preventive mechanism is released, the card processing device 1 and its higher-level apparatus start operation. It is hence prevented that the person in charge handles the card 2 when he or she forgets the release of the operation of the preventive mechanism.

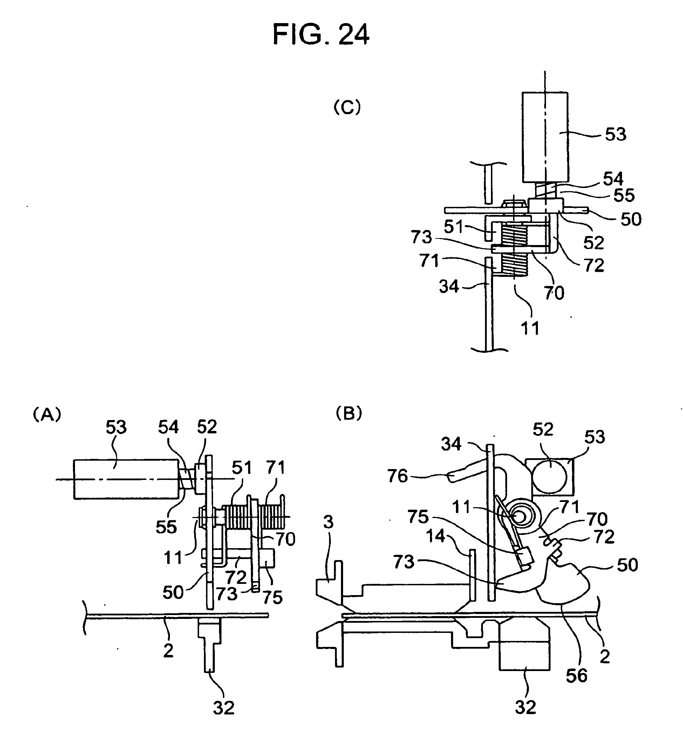

FIG. 24 shows the third embodiment of the preventive mechanism. In the state of FIG. 24, the eccentric cam 50 is apart from a surface of the card 2. FIG. 24(A) shows a front view of the preventive mechanism. For easy understanding of the eccentric cam 50, the wall 34 is not shown. FIG. 24(B) is a side view of the preventive mechanism. FIG. 24(C) is a top view of the preventive mechanism. Parts common to those of the preventive mechanism described in conjunction with FIGS. 20 and 21 are assigned with the same numbers.

The third embodiment of the preventive mechanism includes a release cam 70 in addition to the components of the second embodiment. The release cam 70 rotates about a rotary axis 11. A torsion coil spring 71 is attached to the release cam 70. The spring 71 exerts force onto the release cam 70 such that the release cam 70 rotates clockwise. An upper end of the torsion coil spring 71 abuts the wall 34. A pin 75 is integrally disposed in the release cam 70. A lower end of the torsion coil spring 71 abuts the pin 75. The torsion coil spring 71 attempts to rotate the release cam 70 clockwise by pushing the pin 75.

A pin 72 is integrally disposed in the release cam 70. The pin 72 abuts the eccentric cam 50. Therefore, when the eccentric cam 50 rotates counterclockwise, the cam 50 pushes the pin 72 in an upper-right direction. This causes the release cam 70 to rotate counterclockwise.

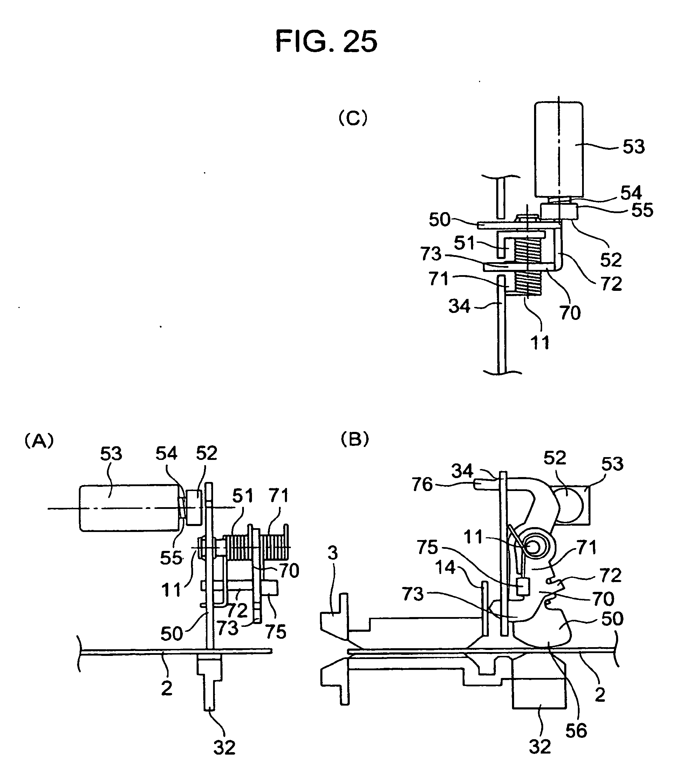

FIG. 25 shows a state in which the eccentric cam is in contact with a surface of the card 2. FIG. 25(A) shows a front view of the preventive mechanism. FIG. 25(B) is a side view of the preventive mechanism. FIG. 25(C) is a top view of the preventive mechanism. As shown in FIG. 25(C), the eccentric cam solenoid 53 conducts a drive operation and the pin 52 has moved to an upper side. Resultantly, the upper-right section of the eccentric cam 50 is released from the pin 52 as shown in FIG. 25(B). Consequently, the eccentric cam 50 rotates clockwise due to force of the torsion coil spring 51, and the outer periphery 56 of the eccentric cam 50 comes into contact with the card 2.

On the other hand, to the force of the torsion coil spring 71, force is being applied to the release cam 70 to cause the cam 70 to rotate clockwise due. Furthermore, when the eccentric cam 50 rotates clockwise, the release cam 70 accordingly rotates clockwise due to the force of the torsion coil spring 71. Thereafter, until a first end 73 of the release cam 70 abuts the shutter 14 in the opened state, the release cam 70 rotates. In this operation, the pin 72 of the release cam 70 is separated from the eccentric cam 50 and the release cam 70 is separated from the eccentric cam 50. Therefore, the release cam 70 does not affect the removal prevention function of the preventive mechanism.

In FIG. 25(C), as for the wall 34, for easy understanding of a state in which the lever 76 of the eccentric cam 50 and the first end of the release cam 70 project from the wall 34, the wall 34 is shown in a crosssection of a portion thereof in which a hole exists.

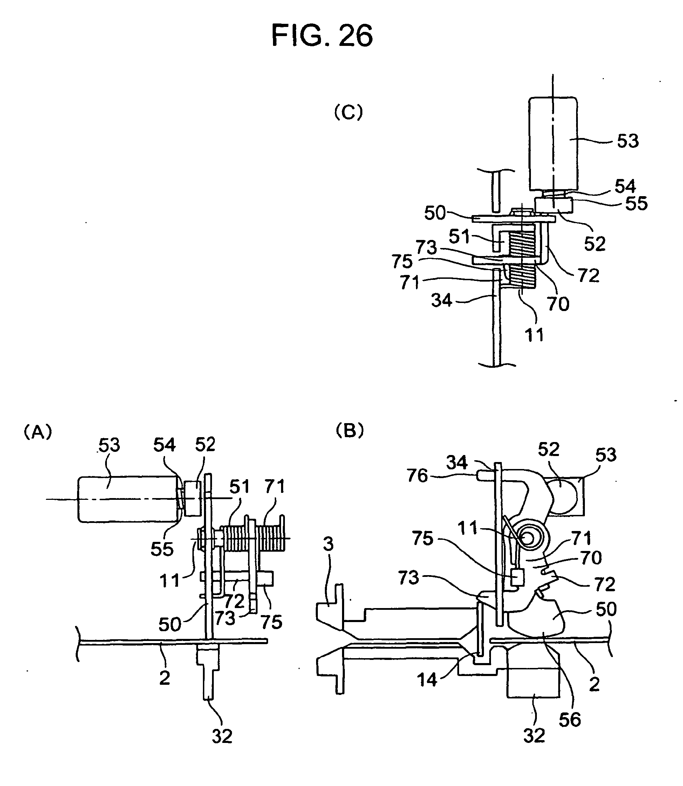

FIG. 26 shows a state when the person in charge acquires the card 2 into the interior of the card processing device 1. FIG. 26(A) shows a front view of the preventive mechanism. FIG. 26(B) is a side view of the preventive mechanism. FIG. 26(C) is a top view of the preventive mechanism. Processing of the card 2 cannot be executed when failure such as the clogging of a card occurs, and hence it is desired that the card 2 is not inserted in the card processing device 1. Therefore, when failure occurs, the card processing device 1 attempts to close the shutter 14. However, since the card 2 exists on the transport path 5 as shown in FIG. 25(B), the shutter 14 cannot be completely closed. On the other hand, the card 2 has been acquired to the right side relative to the shutter 14 in FIG. 26(B). The shutter 14 can be completely closed in this situation.

In FIG. 25, the first end 73 of the release solenoid 50 abuts the shutter 14. In contrast therewith, since the shutter 14 has moved downward in FIG. 26, the first end 73 of the release solenoid 50 is free. Therefore, the release cam 70 further rotates clockwise due to the force of the torsion coil spring 71. As a result, the first end 73 of the release solenoid 50 moves up to a position to cover the upper end of the shutter 14. Thereafter, when the pin 72 of the release cam 70 abuts the eccentric cam 50, the rotation of the release cam 70 stops.

In the state in which the person in charge has removed the card 2 after the operation of the preventive mechanism, the release cam 70 hinders the ascending movement of the shutter 14 and hence the shutter 14 cannot be opened. Resultantly, after the operation of the preventive mechanism, even if the person in charge forgets the release of the operation of the preventive mechanism, it can be prevented that the card 2 is inserted in the card processing device 1. Also, in a normal state in which the preventive mechanism does not operate, it can be prevented that the preventive mechanism mistakenly prevents the removal of the card 2.

To release the operation of the preventive mechanism, it is only necessary to draw the lever 76 in a direction of the removal of the card 2. This causes the eccentric cam 50 to rotate counterclockwise. Since the eccentric cam 50 is abutting the pin 72 of the release cam 70, the release cam 70 rotates counterclockwise in association with the counterclockwise rotation of the eccentric cam 50. Then, the first end 73 of the release cam 70 does not cover the shutter 14. The shutter 14 can hence freely move and can be opened. Moreover, since the eccentric cam 50 does not cover the front of the pin 52 of the eccentric cam solenoid, the pin 52 darts out downward due to the force of the coil spring 55 as shown in FIG. 24(C). As a result, even the drawing of the lever 76 is stopped, the eccentric cam 50 abuts the pin 52 and hence does not rotate clockwise. When the operation of the preventive mechanism is released, the state shown in FIG. 24 is restored.

### <Fourth embodiment>

In FIG. 20(C), the pin 52 is attached to the first end of the movable iron core 54, and this pin 52 prevents an event in which the eccentric cam 50 rotates due to force of elasticity of the coil spring 51. In this situation, due to the force of elasticity of the coil spring 51, force is being applied to the eccentric cam solenoid 53 in a direction perpendicular to the driving direction of the eccentric cam solenoid 53. Therefore, when the card processing device 1 does not detect clogging of the card 2, force is being applied to the eccentric cam solenoid 53 due to the force of elasticity of the coil spring 51. In consequence, there exists a fear that the force adversely affects the operation of the eccentric cam solenoid 53. In a fourth embodiment, which will be described below, the force of elasticity of the coil spring 51 is not applied to the eccentric cam solenoid 53. When compared with the first to third embodiments of the preventive mechanism, the fourth embodiment of the preventive mechanism differs therefrom in the actuator of the eccentric cam solenoid 53 to operate the eccentric cam.

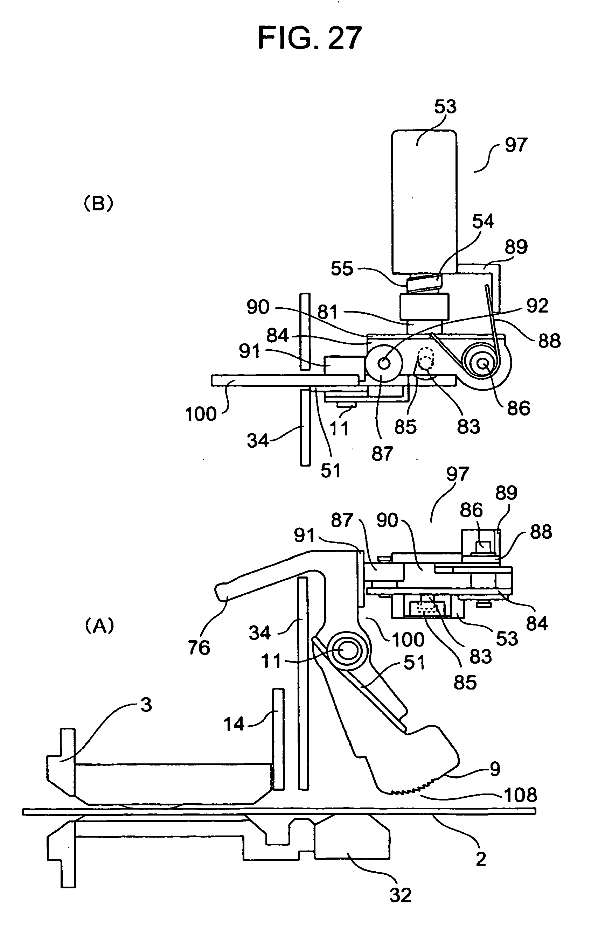

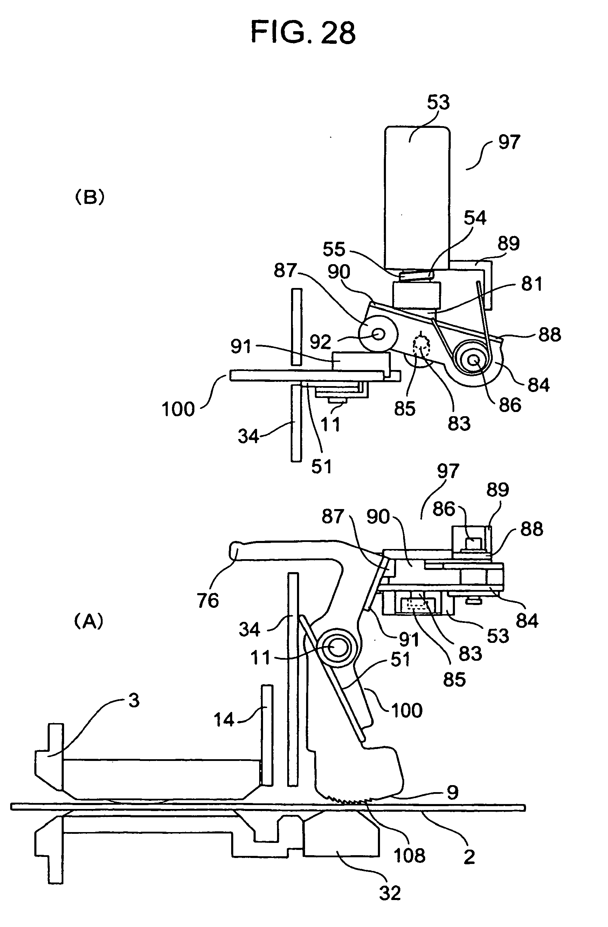

FIGS. 27 and 28 show a fourth embodiment of the preventive mechanism. In FIGS. 27 and 28, parts common to FIG. 20 are assigned with the same numbers. FIG. 27 shows a state in which the eccentric cam solenoid 53 is not conducting a drive operation. FIG. 27(A) shows a side view of the preventive mechanism. FIG. 27(B) is a top view of the preventive mechanism. In FIG. 27(B), the card 2, the insertion port 3, and the shutter 14 are not shown. FIG. 28 shows a state in which the eccentric cam solenoid 53 is conducting a drive operation. FIG. 28(A) shows a side view of the preventive mechanism. FIG. 28(B) is a top view of the preventive mechanism. In FIG. 28(B), the card 2, the insertion port 3, and the shutter 14 are not shown.

To enlarge a surface of contact between an eccentric cam 100 and an actuator 97, a block 91 is arranged in the cam 100. As shown in FIG. 27(B), the block 91 is in contact with a roller 87. Although the cam 100 attempts to rotate clockwise about the rotary axis 11 due to force of elasticity of the coil spring 51, since the roller 87 is in contact with the block 91, the cam 100 does not rotate.

A pin 81 is disposed at a first end of the movable iron core 54. A groove 85 is arranged in the pin 81. A beam 84 is arranged above the pin 81. The beam 84 rotates about a rotary axis 86. The axis 86 is disposed on the right side of the beam to be fixed onto the wall 34. By arranging a fixing member such as a plate or a rod between the wall 34 and the rotary axis 86, it is possible to fix the wall 34 and the rotary axis 86 to each other. A specific fixing member is not shown in FIG. 27. A roller 87 is disposed on the left side of the beam 84. The roller 87 can rotate about a rotary axis 92. A column 83 is arranged at the center of the beam 84. The column 83 projects from a lower side of the beam 84 toward the pin 81. The column 83 is inserted in the groove 85 formed in the pin 81. When the eccentric cam solenoid 53 conducts a drive operation, the movable iron core 54 is drawn into an interior of the solenoid 53. Then, the groove 85 of the pin 81 moves upward and hence an end of the groove 85 butts the column 83 in FIG. 27(B). The column 83 accordingly moves upward. Therefore, the beam 84 rotates clockwise about the rotary axis 86 in FIG. 27(B). A coil spring 88 is arranged around the rotary axis 86. An end of the coil spring 88 abuts a pawl 89. Consequently, force is applied counterclockwise to the beam 84 due to force of elasticity of the coil spring 88. Driving force of the eccentric cam solenoid 53 is stronger than a sum of the counterclockwise force and the force of elasticity of the coil spring 55. Since the roller 87 can rotate about the rotary axis 92, when the beam 84 attempts to rotate about the rotary axis 86, the beam 84 rotates in a state in which the roller 87 can freely rotate. Therefore, the frictional force appearing between the roller 87 and the block 91 is weak.

When the eccentric cam 100 attempts to rotate due to the force of elasticity of the coil spring 51, the force of elasticity is imparted via the roller 87 to the beam 84. In FIG. 27(A), the eccentric cam 100 is attempting to rotate clockwise about the rotary axis 11. In the state shown in FIG. 27, the block 91, the roller 87, and the rotary axis 86 are arranged substantially on one straight line. The force applied to the beam 84 is hence entirely applied to the rotary axis 86. The rotary axis 86 is fixed onto the wall 34 and a gap is arranged between the groove 85 and the column 83. Therefore, the force for the eccentric cam 100 to rotate is not applied to the eccentric cam solenoid 53. That is, it does not occur that the force for the eccentric cam to rotate about the rotary axis 11 exerts adverse influence upon the driving of the solenoid 53.

When the card processing device 1 detects clogging of the card 2, the eccentric cam solenoid 53 conducts a drive operation. FIG. 28 shows this state. In FIG. 28(B), the movable iron core 54 and the pin 81 have moved to the upper side. Moreover, due to the movement of the groove 85 of the pin 81, the column 83 has moved to the upper side. Also, due to the movement of the column 83, the beam 84 has rotated clockwise about the rotary axis 86. Since this causes the roller 87 to be released from the block 91, the eccentric cam 100 rotates about the rotary axis 11, and an upper section of the eccentric cam 100 is moved to the right side. In this situation, the beam 84 attempts to turn counterclockwise due to force of the coil spring 88. However, existence of the block 91 prevents the restoration of the beam 84. That is, due to the force of the coil spring 88, the roller 87 comes into contact with a side surface of the block 91, and hence the restoration of the beam 84 is prevented.

In this state, a saw-toothed knife-edge 108 disposed in the outer periphery 9 of the eccentric cam 100 comes into contact with a surface of the card 2 as shown in FIG. 28(A). If an attempt is made to draw the card at a position outside the card processing device 1, the eccentric cam 100 further rotates clockwise due to frictional force between the knife-edge 108 of the eccentric cam 100 and the card 2. Then, since the outer periphery 9 of the eccentric cam 100 is eccentric centered on the rotary axis 11, the knife-edge 108 of the eccentric cam 100 is further pushed against the surface of the card 2. As a result, when the preventive mechanism operates, it is not possible to draw the card 2 into an exterior space of the card processing device 1.

When the person in charge removes a lid disposed over the card processing device 1, and the eccentric cam 100 is returned to the original position through an operation of the person in charge, the beam 84 rotates counterclockwise due to the force of the coil spring to return to the state of FIG. 27. In this situation, the clogged card 2 can be removed.

In FIGS. 27 and 28, the release cam 70 described in conjunction with FIGS. 24, 25, and 26 can be additionally disposed.

### <Fifth embodiment>

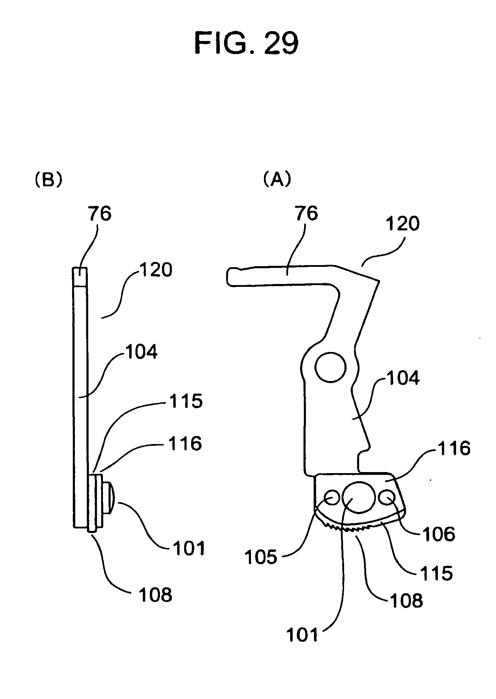

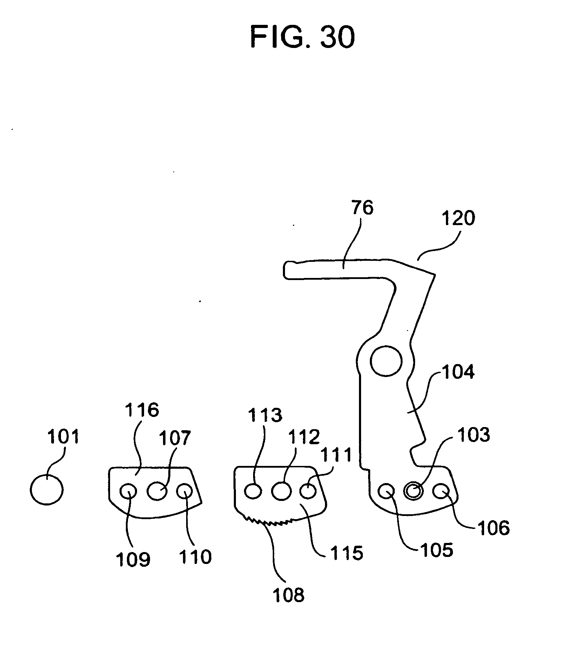

FIGS. 29 and 30 show a fifth embodiment in which the part of the knife-edge of the eccentric cam to be brought into contact with the card can be removed. FIG. 29 shows an assembled eccentric cam 120. FIG. 29(A) shows a side view of the assembled eccentric cam 120. FIG. 29(B) shows a front view of the assembled eccentric cam 120. A plate 115 is attached onto an eccentric cam body 104. The knife-edge 108 is arranged on a first end of the plate 115. The knife-edge 108 includes saw-toothed depressions and projections as described in conjunction with FIG. 16. The plate 115 is attached onto the eccentric cam body 104 using a screw 101. To prevent the screw 101 from being released, a plate 116 is sandwiched between the screw 101 and the plate 115.

FIG. 30 shows a disassembled view of the eccentric cam 120 shown in FIG. 29. On a lower side of the eccentric cam body 104, a screw hole 103 and columns 105 and 106 are disposed. In FIG. 30, the columns 105 and 106 project to an upper side of the surface of the paper. In the plates 115 and 116, there are disposed holes 113 and 109 in which the cylinder 105 is inserted. Moreover, in the plates 115 and 116, there are disposed holes 111 and 110 in which the cylinder 106 is inserted. As a result, when the card 2 comes into contact with the plate 115, frictional force therebetween prevents an event in which the plate 115 rotates about the screw 101. The plate 116 covers the plate 115 excepting the portion of the knife-edge 108. Therefore, the plate 116 reinforces the plate 115 with the knife-edge 108 attached thereto.

Since the eccentric cam body 104 and the plate 115 with the knife-edge 108 can be disassembled, when the knife-edge 108 of the plate 115 is damaged or worn, only the plate 115 can be replaced. When compared with the above case in which the overall eccentric cam 50 is replaced, the replacement of the plate 115 is easier. Furthermore, mutually different materials can be used respectively for the eccentric cam body 104 and the plate 115 with the knife-edge 108. For example, a stiffening process can be conducted for the knife-edge 108. This makes it possible to reduce thickness of the knife-edge 108, and the knife-edge 108 can be easily pushed into the surface of the card 2.

### <Sixth embodiment>

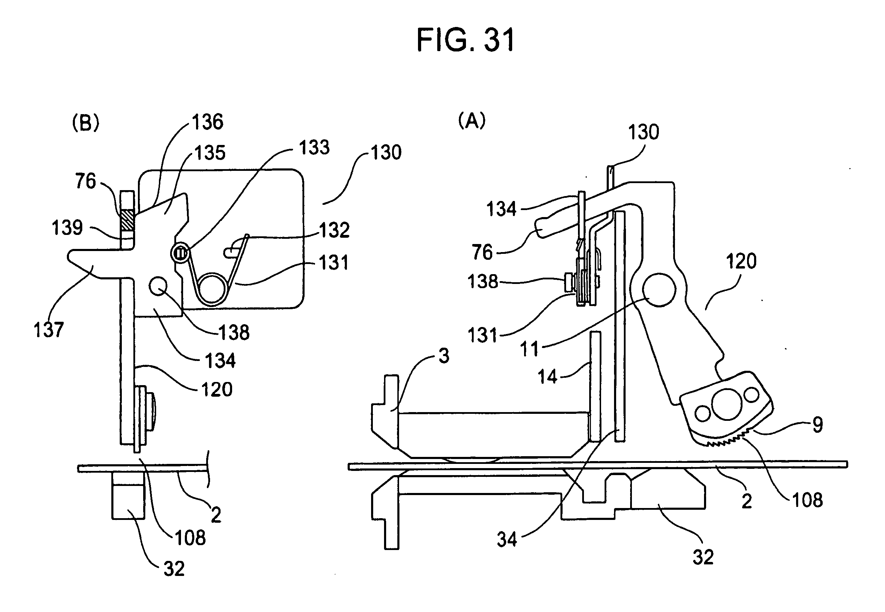

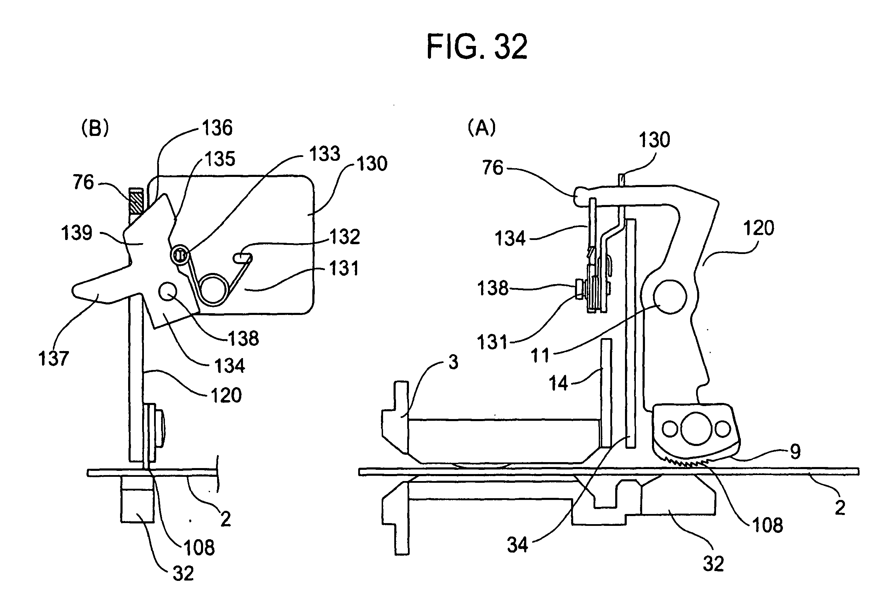

Next, description will be given of a sixth embodiment in which when the eccentric cam enters the fixed state, even if the card is pushed or drawn at an exterior space of the card processing device, the contact part of the eccentric cam in contact with the card is not separated from the card. FIGS. 31 and 32 show a sixth embodiment of the preventive mechanism. FIG. 31 shows a state in which the eccentric cam solenoid 53 does not conduct a drive operation. FIG. 31(A) shows a side view of the preventive mechanism. FIG. 31(B) shows a front view of the preventive mechanism. FIG. 32 shows a state in which the eccentric cam solenoid 53 conducts a drive operation. FIG. 32(A) shows a side view of the preventive mechanism. FIG. 32(B) shows a front view of the preventive mechanism.

To facilitate understanding of the characteristic aspects of the present invention, the actuator 97, the eccentric cam solenoid 53, and the coil spring 51 are not shown in FIGS. 31 and 32. In addition, to facilitate understanding of the characteristic aspects of the present invention, the wall 34, the shutter 14, and the insertion port 3 are not shown in FIGS. 31(B) and 32(B). The parts equal to those described above are assigned with the same numbers.

A stand 130 is attached to the wall 34. A fixing tool 134 is attached to the stand 130 so that the stand 130 rotates about a rotary axis 138 thereof. The fixing tool 134 fixes the position of the eccentric cam 120. In FIG. 31(B), a pawl 137 is disposed on the left side of the fixing tool 135. A pawl 135 is disposed on the upper side of the fixing tool 135. An end of the coil spring 131 is attached to the pawl 133 on the right side of the fixing tool 134. In FIG. 31(B), the right-side pawl 133 projects upward from the surface of the paper. A ring disposed on a first end of the coil spring 131 is engaged with the pawl 133. The other end of the coil spring 131 is attached to a hole 132 of the stand 130. In FIG. 31(B), the coil on the other end of the coil spring 131 projects downward from the surface of the paper. The coil thus projecting downward is engaged with the hole 132. Therefore, due to the force of elasticity of the coil spring 131, force attempting to rotate the fixing tool 134 counterclockwise is being applied to the fixing tool 134. A left edge 139 of the fixing tool 134 abuts the lever 76. Consequently, the rotation of the fixing tool 134 is stopped in the state shown in FIG. 13(B). In FIG. 13(B), the lever 76 is shown in a hatched crosssection.

When the card processing device 1 detects clogging of the card 2, the device 1 drives the eccentric cam solenoid 53. As described above, in FIG. 31, the eccentric cam solenoid 53 is not shown. When the solenoid 53 conducts a drive operation, the eccentric cam 120 rotates clockwise about the rotary axis 11 in FIG. 31(A). Then, the knife-edge 108 disposed in the outer periphery 9 comes into contact with the card 2. FIG. 32 shows the state at this moment.

In FIG. 32, the knife-edge 108 is in contact with the card 2. If an attempt is made to draw the card 2, the eccentric cam 120 tries to further rotate clockwise due to frictional force between the knife-edge 108 and the card 2. Then, since the eccentric cam 120 is eccentric, the knife-edge 108 is further pushed against the card 2. This prevents an event of removal of the card 2.

Since the eccentric cam 120 has rotated clockwise, the lever 76 of the eccentric cam 120 has moved upward in FIG. 32(B). Therefore, the lever 76 is released from the left edge 139 of the fixing tool 134. The fixing tool 134 hence rotates counterclockwise about the rotary axis 138 due to the force of elasticity of the coil spring 131. Thereafter, at a position where the upper-side pawl 135 is in contact with the lever 76, the rotation of the fixing tool is stopped. This prevents the lever 76 from moving downward.

Consider a case in which the upper-side pawl 135 comes into contact with the lever 76, the card 2 is further inserted in the insertion port 3 of the card processing device 1. In this situation, due to the frictional force between the card 2 and knife-edge 108, the eccentric cam 120 attempts to rotate counterclockwise. The lever 76 then attempts to move to a lower-left side. However, since the pawl 135 of the fixing tool 134 is in contact with the lever 76, the eccentric cam 120 cannot rotate counterclockwise. Therefore, even if the card 2 is pushed at an outside position of the card processing device 1, since the eccentric cam 120 does not rotate, the card 2 does not move. On the other hand, if the card 2 is drawn, due to the frictional force between the card 2 and knife-edge 108, the eccentric cam 120 rotates clockwise and the knife-edge 108 is further pushed against the surface of the card 2. Consequently, the card 2 cannot be drawn.

Therefore, even if the card set to the fixed state by the eccentric cam 120 is drawn or pushed at an outside position of the card processing device 1, the card 2 does not move. This hence prevents an event in which the card 2 clogged in the device 1 is removed.

To release the fixed state of the eccentric cam 120, the pawl 137 of the fixing tool 134 is lifted upward to be rotated clockwise in FIG. 32(B). Thereafter, the lever 76 is pushed down and then the eccentric cam 120 is rotated counterclockwise in FIG. 32(A). Then, the pin 52 attached to the first end of the eccentric cam solenoid 53 or the roller 87 comes into contact with the eccentric cam 120 to fix the position of the cam 120. This results in the state shown in FIG. 31. In this situation, as shown in FIG. 31(A), since the knife-edge 108 is lifted up from the surface of the card 2, the clogged card 2 can be removed.

To strengthen the force of friction between the lever 76 and the pawl 135 of the fixing tool 134, a saw-tooth knife-edge can be arranged in the outer periphery of the pawl 135. Additionally, rubber can be attached onto the outer periphery 136 of the pawl 135. Furthermore, in FIGS. 31 and 32, the release cam 70 described in conjunction with FIGS. 24, 25, and 26 can be further disposed.

In the embodiments described above, the eccentric cams 50, 100, and 120 can be arranged on a front side or a rear side of the card 2. Also, the coil spring 51 can be disposed on one side or the other side of the eccentric cams 50, 100, and 120. For example, in FIG. 27(A), the coil spring 51 can be arranged on a rear side of the eccentric cam 100 with respect to the surface of the paper. In addition, the actuator 97 can be disposed at a mirror symmetric position on a lower side with the eccentric cam 100 as a mirror plane in FIG. 27(B).

Although various embodiments have been described, the present invention is not restricted by the embodiments.

## Claims

1. A card processing device, comprising:
an insertion port (3) for inserting a card having recorded information;
a transport mechanism (4) for transporting the card inserted in the insertion port to the interior of the card processing device or transporting the card from the interior to the insertion port;
a head (15, 16) for reading information from the card transported in the interior of the card processing device or writing information into the card;
a sensor (6-8) for detecting an abnormality of the card; and
a preventive mechanism (10-13, 50-139) for preventing removal of the card from the insertion port,
**characterised in that** the preventive mechanism is adapted for preventing removal of the card when the sensor detects an abnormality and comprises :
an eccentric cam (10, 50, 100, 104, 120) including an outer peripheral section (9, 56) with a long distance (L2) from a rotary axis (11) to an outer periphery to be brought into contact with the card to be transported and an outer peripheral section (9, 56) with a short distance from the rotary axis (11) to an outer periphery to be separated from the card to be transported; and
an actuator (13, 53) which causes, when the sensor does not detect an abnormality, the outer peripheral section with a short distance to face a transport path of the card and which rotates, when the sensor detects an abnormality, the eccentric cam to cause the outer peripheral section with a long distance to face the transport path of the card to thereby bring the outer periphery of the eccentric cam into contact with the card.

2. A card processing device according to claim 1, **characterized in that** the actuator (13, 53) rotates, when the sensor (6-8) detects an abnormality, the eccentric cam (10, 50, 100, 104, 120) to cause the outer peripheral section with a long distance to move in a direction substantially equal to a direction to draw the card from the insertion port.

3. A card processing device according to claim 1, **characterized in that** depressions and projections (41, 56, 108) are disposed in the outer periphery of the eccentric cam.

4. A card processing device according to claim 1, **characterized in that** rubber (40, 60) is disposed in the outer periphery of the eccentric cam.

5. A card processing device according to claim 1, **characterized by** comprising a fixing tool for fixing a position of the eccentric cam thus rotated.

## Patentansprüche

1. Kartenbehandlungsvorrichtung, aufweisend:
eine Einführöffnung (3) zum Einführen einer Karte mit aufgezeichneten Informationen,
einen Transportmechanismus (4) zum Transportieren der in die Einführöffnung eingeführten Karte zum Inneren der Kartenhandhabungsvorrichtung oder zum Transportieren der Karte aus dem Inneren zur Einführöffnung,
einen Kopf (15, 16) zum Lesen von Informationen von der ins Innere der Kartenbehandlungsvorrichtung transportierten Karte oder zum Schreiben von Informationen auf die Karte,
einen Sensor (6-8) zum Erfassen einer Unregelmäßigkeit für die Karte und
einen Verhinderungsmechanismus (10-13, 50-139) zum Verhindern eines Entfernens der Karte aus der Einführöffnung,
**dadurch gekennzeichnet, dass** der Verhinderungsmechanismus eingerichtet ist, das Entnehmen der Karte zu verhindern, wenn der Sensor eine Unregelmäßigkeit erfasst, und folgendes umfasst:
eine exzentrische Nocke (10, 50, 100, 104, 120) mit einem Außenumfangsabschnitt (9, 56) mit langem Abstand (L2) von einer Drehachse (11) zum Außenumfang, der in Kontakt mit der zu transportierenden Karte gebracht werden soll, sowie einem Außenumfangsabschnitt (9, 56) mit kurzem Abstand von der Drehachse (11) zum Außenumfang, der von der zu transportierenden.Karte gelöst werden soll, und
einen Betätiger (13, 53), der dann, wenn der Sensor keine Unregelmäßigkeit erfasst, bewirkt, dass der Außenumfangsabschnitt mit kurzem Abstand einem Transportweg (5) der Karte zugewandt ist, und der dann, wenn der Sensor eine Unregelmäßigkeit erfasst, die exzentrische Nocke dreht, so dass der Außenumfangsabschnitt mit langem Abstand dem Transportweg der Karte zugewandt wird und der Außenumfang der exzentrischen Nocke so in Kontakt mit der Karte gebracht wird.

2. Vorrichtung nach Anspruch 1, **dadurch gekennzeichnet, dass** der Betätiger (13, 53) dann, wenn der Sensor (6-8) eine Unregelmäßigkeit erfasst, die exzentrische Nocke (10, 50, 100, 104, 120) dreht, so dass sich der Außenumfangsabschnitt mit langem Abstand in eine Richtung bewegt, die im wesentlichen gleich der Richtung des Ziehens der Karte aus der Einführöffnung ist.

3. Vorrichtung nach Anspruch 1, **dadurch gekennzeichnet, dass** im Außenumfang der exzentrischen Nocke Vertiefungen und Vorsprünge (41, 56, 108) angeordnet sind.

4. Vorrichtung nach Anspruch 1, **dadurch gekennzeichnet, dass** am Außenumfang der exzentrischen Nocke Gummi (40, 60) angeordnet ist.

5. Vorrichtung nach Anspruch 1, **gekennzeichnet durch** eine Festlegungshilfe zum Festlegen der Position der gedrehten exzentrischen Nocke.

## Revendications

1. Dispositif de traitement de carte, comprenant :
un port d'insertion (3) pour insérer une carte contenant des informations enregistrées ;
un mécanisme de transport (4) pour transporter la carte insérée dans le port d'insertion vers l'intérieur du dispositif de traitement de carte, ou pour transporter la carte depuis l'intérieur vers le port d'insertion ;
une tête (15, 16) pour lire des informations à partir de la carte transportée à l'intérieur du dispositif de traitement de carte, ou pour écrire des informations sur la carte ;
un capteur (6-8) pour détecter une anomalie de la carte ; et
un mécanisme de prévention (10-13, 50-139) pour empêcher le retrait de la carte hors du port d'insertion,
**caractérisé en ce que** le mécanisme de prévention est adapté pour empêcher le retrait de la carte quand le capteur détecte une anomalie, et qu'il comprend :
une came excentrique (10, 60, 100, 104, 120) comprenant une section périphérique extérieure (9, 56) avec une longue distance (L2) depuis un axe de rotation (11) jusqu'à une périphérie extérieure devant être amenée en contact avec la carte qui doit être transportée, et une section périphérique extérieure (9, 56) avec une courte distance depuis l'axe de rotation (11) jusqu'à une périphérie extérieure devant être séparée de la carte qui doit être transportée ; et
un actionneur (13, 53) qui, quand le capteur ne détecte pas d'anomalie, amène la section périphérique extérieure avec une courte distance à se trouver face à un chemin de transport (5) de la carte, et qui, quand le capteur détecte une anomalie, fait tourner la came excentrique, de façon à amener la section périphérique extérieure avec une longue distance, à se trouver face au chemin de transport de la carte, de façon à amener ainsi la périphérie extérieure de la came excentrique en contact avec la carte.

2. Dispositif de traitement de carte selon la revendication 1, **caractérisé en ce que** l'actionneur (13, 53), quand le capteur (6-8) détecte une anomalie, fait tourner la came excentrique (10, 50, 100, 104, 120) de façon à amener la section périphérique extérieure avec une longue distance à se déplacer dans une direction sensiblement égale à une direction dans laquelle la carte est extraite du port d'insertion.

3. Dispositif de traitement de carte selon la revendication 1, **caractérisé en ce que** des creux et des bosses (41, 56, 108) sont disposés dans la périphérie extérieure de la came excentrique.

4. Dispositif de traitement de carte selon la revendication 1, **caractérisé en ce que** du caoutchouc (40, 60) est disposé dans la périphérie extérieure de la came excentrique.

5. Dispositif de traitement de carte selon la revendication 1, **caractérisé en ce qu'**il comprend un outil de fixation pour fixer une position de la came excentrique ainsi tournée.
